# EUROPEAN PATENT APPLICATION

(11) **EP 1 387 293 A1**
(43) Date of publication of application: **04.02.2004**
(21) Application number: 02016948.8
(22) Date of filing: 01.08.2002
(51) Int. Cl.: G06F 17/30

(54) **Data structure manipulation system**

(71) Applicant: SUN MICROSYSTEMS, INC., Palo Alto, California 94303 (US)
(72) Inventor: Janssen, Ocke, 20255 Hamburg (DE)
(74) Representative: HOFFMANN - EITLE

(57) **Abstract**

A method of manipulating a first data structure, comprising the operations of, compiling a dataset descriptive of said first data structure, amending said dataset so as to describe a second data structure, and operating on at least a part of a database so that it comprises said second data structure. The operation of compiling may comprise the further operations of extracting information from said first data structure, and formulating said dataset so as to describe said first data structure based on said extracted information. The invention allows convenient offline manipulations of databases.

## Description

### FIELD OF THE INVENTION

The present application relates to methods and systems for the manipulation of data structures, and to client and server side elements of such systems, as well as a computer program for carrying out such methods.

### BACKGROUND OF THE INVENTION

Databases are becoming an increasingly important resource and the information found in them throughout the world is growing in size, complexity and value very quickly. As databases grow and develop over time, and the uses and applications to which they are put change, it is necessary to make changes to the structure of the database, so as to ensure compatibility and stability, to improve performance etc.

In administering a database, it is conceivable to make changes separately to individual records, with the database being updated after each change. It is a drawback of this method, that if after a plurality of such changing steps, it is perceived that the final structure of the database does not correspond to that originally intended, it is impossible for the database to revert to its structure, i.e. the structure before the series of changing steps was commenced. It is furthermore extremely difficult to predict the final structure of the database resulting from intermediate changing steps during a sequence of changes, since the final structure of the database will only be detectable once all necessary changes have been integrated into the database, and the database itself updated.

### SUMMARY OF THE INVENTION

It is therefore desirable to address these drawbacks of the method of administering a database as known in the prior art. It is further desirable to improve the facility with which amendments may be made to a database.

According to an example a method of manipulating a first data structure comprises the operations of performing a compilation operation to generate a dataset descriptive of said first data structure, manipulating said dataset so as to describe a second data structure, and operating on at least a part of a database so that it comprises said second data structure. Thus, rather than the user retrieving individual tables from the database, making desired changes to them and then reintegrating them into the database, the user may identify the section of the database in which he is interested which may even include the entire database. A model, or description of this part of the database may then be automatically formulated, and stored. The user is then free to make any changes desired to this model or description, by means for example of a conventional user interface, in which an image representing the model or description may be displayed on a computer screen, to which the user can make the desired changes.

The first data structure may be at least a part of the database.

At the operation of operating on said second data structure, the first data structure may be at least partially replaced in the database.

The dataset may be compiled from data contributed by a user and the compilation operation may comprise the further operations of extracting information from said first data structure, and formulating said dataset so as to describe said first data structure based on said extracted information.

The extracted information may comprise data descriptive of the structure of said first data structure or of the values stored in said first data structure.

The extracted information may comprise a description of the relations between elements of the first data structure.

The dataset may be formulated to describe the first data structure according to a predefined format.

The operation of manipulating may comprise changing the dataset in a manner which corresponds to a change in the value of data in the first data structure and/or may include adding a data value and/or may include changing the dataset in a manner which corresponds to a change in a structural feature of said first data structure and/or may include adding a structural feature.

Further, the operation of manipulating may comprise generating history data of a sequence of individual manipulation operations and/or may comprise accessing history data to undo or redo at least one of the manipulation operations.

Prior to the operating step, there may further be performed an operation of verifying whether the dataset describes a structure that complies with a predetermined format and/or with the structure of the database.

This operation of verification may comprise determining whether the descriptive dataset complies with a set of predefined rules.

The operating step may comprise the operations of interpreting the dataset in the context of the format of said database, and instructing said database so that said database reflects the interpreted dataset.

The operation of interpreting may include analysing the structural features of the dataset and data and/or may include modifying the structural features of the database corresponding to the structural features of the dataset and modifying the data of the database corresponding to the data included in the dataset.

The first data structure may be at least a part of a further database.

Prior to the operation of operating, there may further be performed an operation of verifying whether said dataset describes a structure that complies with the structure of the further database.

The first data structure may comprise a plurality of two dimensional tables.

Further, according to another example, there is provided a program having instructions adapted to carry out at least one of the above operations. According to another example, there is provided a computer readable medium in which a program in embodied, said program having instructions adapted to carry out at least one of the above operations. A computer program product may comprise the computer readable medium.

Further according to an example, there is provided a data structure manipulation system comprising a compilation unit for compiling a dataset descriptive of a first data structure, a manipulation unit for amending said dataset so as to describe a second data structure, an operating unit, for operating on at least a part of a database so that it comprises said second data structure and a memory for storing said database.

According to another example there is provided a client side component of a data structure manipulation system, the client side component comprising a compilation initiator for causing a dataset descriptive of a first data structure to be compiled, a manipulation initiator for causing amendment of said dataset so as to describe a second data structure, and an operation initiator for causing at least a part of a database to be operated upon so that it comprises said second data structure.

According to another example, there is provided a server side component of a data structure manipulation system, for use in conjunction with the client side component as discussed above, the server side component comprising a memory for storing said database, and an operating unit for operating, in response to a signal from said operation initiator, on at least a part of said database so that said database comprises a second data structure described by said descriptive dataset.

Further, according to another example, there is provided a computer system comprising a data structure manipulation system according to the invention as discussed above.

Further features of the invention are disclosed in further claims.

### BRIEF DESCRIPTION OF THE DRAWINGS

For a better understanding of the invention, and to show how the same may be carried into effect, reference will now be made, by way of example, to the accompanying drawings, in which:
- Fig. 1: shows the flow of information in a method of administering a database according to an embodiment of the invention.
- Fig. 2: shows a method of administering a database according to the embodiment of the invention as described with reference to Fig. 1.
- Fig. 3: shown details of a possible realisation of the descriptive dataset structure 20 as used in the present invention.
- Fig. 4: shows the creation of a descriptor within the Staroffice API
- Fig. 5: shows in further detail the steps which may make up step S020 of the method of Fig. 2.
- Fig. 6: shows details of step S0220
- Fig. 7: shows details of step S0230
- Fig. 8: shows details of step S0240 as referred to above, and relates to an alternative realisation of the method of step S0220.
- Fig. 9: shows a data structure manipulation system according to an embodiment of the present invention.
- Fig. 10: shows the flow of information in a method of administering a database according to a further embodiment of the invention.
- Fig. 11: shows a further development of the embodiment of the present invention described with reference to Fig. 9.
- Fig. 12: shows the flow of information in a method according to a further embodiment of the invention.
- Fig. 13: shows a development of the embodiment of the present invention as discussed with regard to Fig. 9.
- Fig. 14: shows further detail of the steps involved in the method of step S010 as described for example with reference to Fig. 2 according to one embodiment of the invention.
- Fig. 15: shows one possible more detailed realisation of the steps S0101 and S0102 of the method of step S010.
- Fig. 16: shows a data structure manipulation system according to another embodiment of the invention.
- Fig. 17: shows the flow of information in a method according to a further embodiment of the invention.
- Fig. 18: shows a method of administering a database according to the embodiment of the invention shown in Fig. 17.
- Fig. 19: shows a system for the administration of a database according to the embodiment of the invention shown in Fig. 16.
- Fig. 20: shows in further detail one method of carrying out the step S030 of verifying compliance of the description of the second data structure with a predetermined format.
- Fig. 21: shows in further detail the method of operation step S040 according to an embodiment of the invention.
- Fig. 22: shows in further detail the method of step S040 as described above with reference to Fig. 21.
- Fig. 23: shows in further detail the operational units that the Operating unit 203 in the data structure manipulation system for example as described above with reference to Fig. 19 may comprise according to an embodiment of the invention.
- Fig. 24: shows the flow of information in a method of administering a database according to a further embodiment of the invention.
- Fig. 25: shows the flow of information in a method of administering a database according to another embodiment of the invention.
- Fig. 26: shows the method of administering a database according to the embodiment of the invention shown in Fig. 25.
- Fig. 27: shows further detail of the method of step S0301, as described with reference to Fig. 20.
- Fig. 28: shows the flow of information in a method of administering a database according to another embodiment of the invention.
- Fig. 29: shows the method of administering a database according to the embodiment of the invention shown in Fig. 28.
- Fig. 30: shows further detail of the method of step S0302, as described with reference to Fig. 20.
- Fig. 31: shows a yet further embodiment of the present invention, which is a development of the embodiment discussed with reference to Fig. 9.
- Fig. 32: shows a further development of this embodiment, which further includes the verification unit 204 as described with reference to Fig. 23.
- Fig. 33: shows a possible distribution of functional units as described with regard to the foregoing embodiments between a client and a server, and the distribution of method steps as described with regard to the foregoing embodiments between a user, a client and a server.
- Fig. 34: shows a further possible distribution of functional units as described with regard to the foregoing embodiments between a client and a server, and the distribution of method steps as described with regard to the foregoing embodiments between a user, a client and a server.
- Fig. 35: shows a further possible distribution of functional units as described with regard to the foregoing embodiments between a client and a server, and the distribution of method steps as described with regard to the foregoing embodiments between a user, a client and a server.
- Fig. 36: shows a further possible distribution of functional units as described with regard to the foregoing embodiments between a client and a server, and the distribution of method steps as described with regard to the foregoing embodiments between a user, a client and a server.
- Fig. 37: shows a method of administering a database.

### DETAILED DESCRIPTION OF THE PREFERRED EMBODIMENTS

### Databases

In a relational database, data is conceptually represented in two dimensional tables consisting of rows and columns. Strictly speaking, the tables are called relations, the rows, tuples and the columns, attributes. A relational database uses attribute values to associate data from different tables. Relational systems provide a development environment that is significantly easier to use than that provided by previous approaches. The data structures are simple to build and easy to understand and the writing of programs to manipulate them relatively straightforward. For these reasons, in recent years the vast majority of producers of new database systems based their products to a greater or lesser extent on the relational model.

One of the great benefits of relational databases is that data can be retrieved from any set of relational tables using a combination of just eight intuitively simple relational operations. These comprise what is known as the relational algebra. The five basic operations of relational algebra are: restrict, project, times, union and minus. There are additionally three derived operations: join, intersect and divide. These are derived in that they can be built from the basic operations. However, it is convenient to treat them as if they were basic operations. All relational systems in the known art use the algebra to return data from tables. However the algebra is rarely supported directly by a system.

Most systems provide an additional interface frequently in the form of the SQL (Structured Query Language) language. SQL is a declarative database language where users can write a statement that describes a given set of data. The task of the SQL interpreter is to break the given SQL statements down into a series of algebraic operations that will build the database described by the statement. One major principle of the relational algebra is that all of its operations work at the relation level alone. The only argument they may take is a relation or a set of relations and all that they return is a single relation that satisfies the constraints placed by the operation. The relations provided to the argument must, by definition exist within the given database, either as base relations or views. The resulting relation is a temporary relation that has been derived by applying an operation to the given relation.

SQL, which was originally devised in the 1970's as a language for relational databases and has since become the *de facto* industry standard language for relational systems. With SQL, a database user can create and delete data held in relations, enforce relational integrity rules and perform the full range of operations required by the relational algebra. It is a relationally complete language, but is not as yet a computationally complete language. It exists merely as an interface to data held in relations. Only some very basic data processing functions are provided. Complete applications usually require SQL course to be embedded within computationally complete language such as C, Fortran, Cobol, Pascal or Ada.

SQL has undergone a series of standardisations, and not all relational products that support SQL necessarily support all of the most recent standards.

Using SQL, a sequence of operations is specified in terms of the relational algebra, for retrieving a given set of data.

This command is then translated by the underlying system in to a series of algebraic operations. As well as retrieving data from a relational database, SQL also has provisions for database creation and database security. There are three basic types of SQL command:
1. Data definition commands. These are commands that define a content of a relational database in terms of tables and views. A table is the equivalent of a base relation. These commands include column definition expressions that define the attributes of a table. A view is defined by using a data manipulation command to specify its data content.
2. Data manipulation command. These commands are used to search, retrieved, update and delete data held in tables and views. They include simple facilities for processing the data held in tables and views.
3. Data control comands. These are used for controlling access to tables and views.

A candidate Key is an attribute or set of attributes that can be used to identify uniquely each tuple (or row) in a relation, (i.e. has a different value in every row).

A primary key is a special form of candidate key. It may be possible to have more than one key for a relation, and one candidate key is nominated as the primary key, i.e. that which is used to identify the row.

A foreign key is an attribute (or set of attributes) that exists in more than one table and which is the primary key for one of those tables.

### Normal Forms

Normalisation is a process by which it can be ensured that data structures in a relational database are efficient. A relational database can be described as efficient when it has the following characteristics:
1. Absence of redundancy. A system with redundancy is one where the same data can appear in more than one place. As well as wasting storage space, this gives potential for the data to be inconsistent and ambiguous. Where there is a lot of redundancy in a relation, certain anomalies can arise:
   a) Update anomalies occur if one value is changed, it is necessary to propagate that change through all tuples (or rows) which use that value, so as to avoid the database becoming inconsistent.
   b) Insert anomalies can occur when a plurality of values, where for any given first value the remaining values should logically always be the same, have to be entered separately, such that it is possible for different values to be entered for the same given first variable.
2. Minimal use of NULL values. It is possible to have a number of valid representations of a database, some of which may result in an extensive number of tuples (or rows) having NULL values. Apart from the redundancy aspect, NULL values are a problem in relational databases because their precise meaning cannot be determined.
3. Prevention of loss of information. Another form of anomaly exists, known as a deletion anomaly. A deletion anomaly can arise where, when a tuple (or row) to which a particular value is assigned is deleted, all information associated with that variable in other variables, which is only present in that tuple (or row) is also lost.

To optimise a database, so as to achieve as far as possible the above described objectives, a series of definitions are applied. Normalisation theory consists of a number of definitions of what are termed normal forms. The most basic normal form is the first normal form (1nf).

The first normal form requires that all attribute domains in a relational database must include only simple non-dividable values, and that every attribute value in every tuple (or row) must be a single value from its domain. Applying 1nf gives a database which is valid in terms of basic relational theory, but is a poor representation with a lot of redundancy and the potential for anomalies described above.

Functional dependency is a concept central to normalisation theory. It is concerned with a particular semantic relationship between the attributes of the relation. If we take a set of attributes (x) within a relation, we say that an attribute, or set or attributes (a) is functionally dependent on x if, and only if, for every combination of values in x, there is one, and only one, corresponding value in a. Functional dependencies are a useful means of identifying candidate keys.

If there exists a functional dependency in the form, *A is functionally dependent on X,* where the union is X and A comprises the complete set of attributes in a relation, if each tuple (or row) is to be unique, each combination of values in X can only occur once, as it is tied to exactly one set of values in A which comprises the rest of the tuple (or row). This does not seem that X is necessarily a candidate key. This is what is known as a superkey. A superkey exists when each combination of values for a particular set of attributes can occur only once. A superkey for any relation is the set of all it attributes. However this is not much use as an identifier. We need to extend a definition of candidate key from that given already. The candidate key is a super key that has no redundancy. By redundancy, we mean super key with attributes within it that could be removed but still be able to give a unique identity to each tuple (or row). A candidate key is a non-reducible set of attributes that gives a unique identity to a tuple (or row). In order to deduce candidate keys we need to reduce all super keys to a minimal set of attributes required to provide unique tuple (or row) identity. All attributes that are part of a candidate key are termed key attributes. Attributes that do not form any part of a candidate key are non-key attributes. In those relations with more than one candidate key, we must designate one of these to be the primary key. Having identified the primary key for each relation, we can improve our database design by the application of the second normal form (2nf). To be in 2nf, a relation must be: (i) in 1nf; (ii) have no non-key attributes that are not fully functionally dependent upon the primary key.

A transitive dependency exists where there is a functional dependency between a non-key attribute and another non-key attribute. A relation in third normal form 3nf is one with no transitive dependencies. To be in 3nf, a relation must be in 2nf, and contain no transitive dependencies. When we find the transitive dependency, we must remove all those attributes that have a transitive dependency. We must then create a new relation consisting of these removed attributes along with the attributes upon which they are dependent. The attribute on which the dependence exist becomes the primary key for the new relation and remains as a foreign key in the original relation, allowing the tuples (or rows) to be reconstituted as before using a natural join. 3nf is concerned with functional dependencies between the primary key and non-key attributes and with transitive dependencies. A relation may still have redundancy problems in 3nf as it ignores relationships between or within candidate keys. As 3nf is only defined in terms of functional dependencies between the primary key and a non-key attribute and transitive dependencies, dependencies between these candidate keys are of interest to the database designer aiming for 3nf. In fact, because each of these attributes has to be unique to each tuple (or row), once we have created a tuple (or row) with a particular set of attribute values, it is not then possible to associate these values with any other. Unnecessary replication of data will simply not occur. However, a problem can arise when a relation has more than one candidate key and some of these keys are composite. Boyce-Codd normal form (BCNF) was devised in order to address this sort of problem. In BCNF, we have the concept of a determinant. This is very similar to functional dependency. When we have a functional dependency in the form B is functionally dependent on A, we say that A is determinant. BCNF is achieved when all determinants in relation are candidate keys. When we have a determinant with non-unique values, we must decompose the relation by separating out the non-unique determinants along with those attributes which have a functional dependency upon it, leaving this determinant as a foreign key in the original relation. Thus, BCNF is a strong form of 3nf.

Most relations that are in 3nf are also in BCNF. The only time that a relation might be in 3nf but not in BCNF is when there is more than one candidate key for a relation and at least one of these candidate keys is composite.

### APIs

An API, or Application Program Interface is a set of routines, protocols, and tools for building software applications. An API assists the development of a program by providing a set of building blocks, which can be put together by a programmer. Most operating environments provide an API so that programmers can write applications consistent with the operating environment.

An API may comprise calls, subroutines, and software interrupts so that a program, usually a higher-level program such as an application program, can make use of the usually lower-level services and functions of another application, operating system, network operating system, driver, or other lower-level software program. The resulting library of functions provides new capability, such as writing a file in an application program's proprietary format, communicating over a TCP/IP network, or accessing an SQL database. The lower-level software may be integrated with the application program at compile/link time (using an include file or object library) or loaded (before the application program) as a driver. APIs are increasingly popular now that open systems are popular and customers insist that systems and products work with those of other vendors.

An example of an API is the StarOffice API developed by Sun Microsystems. In particular, the SDBCX Module offers a set of high level services and interfaces for database applications.

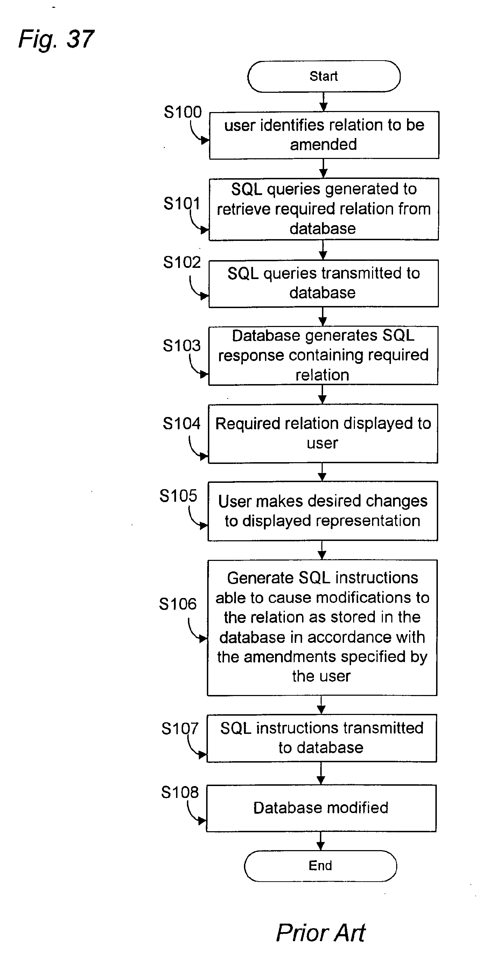

A procedure to administer a database will now be discussed with reference to Fig. 37.

A database is stored at a server. The information in this database can be accessed by users in a local area network to which the server is connected. When it is necessary to make changes to the structure or indeed to data in the database, a user identifies the relation to be amended at step S100. SQL queries are generated to retrieve the required relation from the database at step S101, and these SQL queries are then transmitted to the database at step S102. The database generates an SQL response containing the required relation at step S103, and returned so that the record or other structural element to be modified is read from the database via the local network to a user station. At step S104 the required relation is displayed to the user, and at step S105 the user makes desired changes to the displayed representation. SQL instructions able to cause modifications to the relation as stored in the database in accordance with the amendments specified by the user are then generated at step S106. These SQL instructions are transmitted to the database at step S107, and the database is finally modified at step S108, so that changes made to the record or other structural element thus downloaded as necessary by the user at the user station as required, are reintegrated into the database, and the database is updated to reflect the changes.

Thus according to this method of administering the database, changes are made separately to individual records, with the database being updated after each change.

It is a drawback of this method that if after a plurality of such changing operations, it is perceived that the final structure of the database does not correspond to that originally intended, it is impossible for the database to revert to its structure before the series of changing operations was commenced. It is furthermore extremely difficult to predict the final structure of the database 106 resulting from intermediate changing operations during a sequence of changes, since the final structure of the database will only be detectable once all necessary changes have been integrated into the database, and the database itself updated.

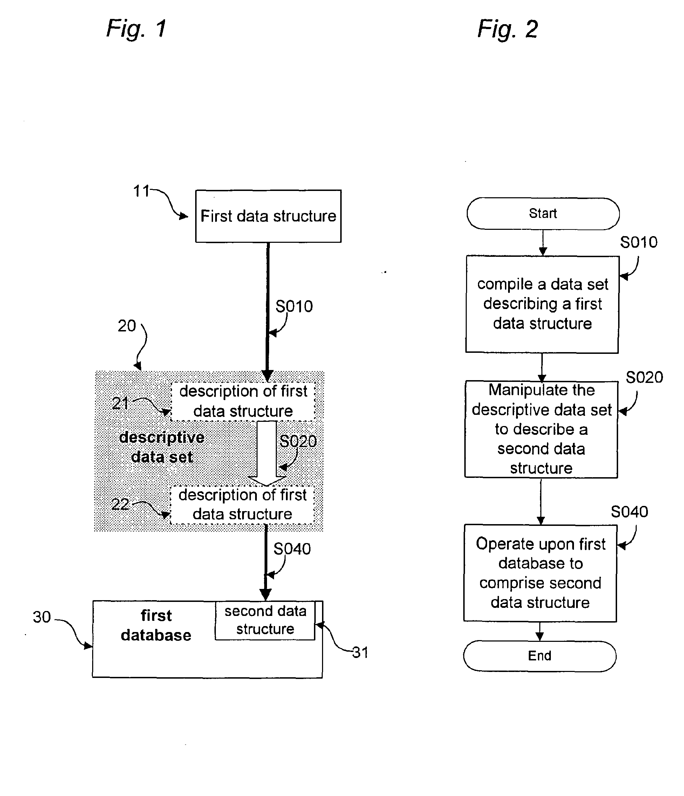

In the following a method of administering a database will be described with regard to Fig. 1.

Fig. 1 shows the flow of information in a method of administering a database according to an embodiment of the invention. According to this embodiment, there is provided a descriptive dataset structure 20, using which structure a description of the first data structure is compiled in an operation S010, from a first data structure 11. This description of the first dataset is then processed so as to describe a second data structure, in the operation S020, to form a new description 22, a database 30 is then defined in a operation S040, so as to comprise the second data structure, described by the description of the second data structure 22.

Thus, rather than the user retrieving individual tables from the database, making desired changes to them and then reintegrating them into the database, the user may identify the section of the database in which he is interested which may even include the entire database. A model, or description of this part of the database may then be automatically formulated, and stored. The user is then free to make any changes desired to this model or description, by means for example of a conventional user interface, in which an image representing the model or description may be displayed on a computer screen, to which the user can make the desired changes. As changes are made to the representation on the screen, the model or description may be changed correspondingly. Once the user is satisfied with the changes that he has made, it may be then, and only then, that any changes are actually made to the database itself. This method of administering a database has a variety of advantages, since it may be possible to make changes without maintaining a real time connection to the database, and it is possible to make experimental changes to the structure of the database with the option to revert to previous arrangements without any changes being made to the database itself.

The first data structure 11 may comprise for example a file in the storage means of a computer and the descriptive dataset may comprise elements of an API (Application Programming Interface) as described above. The operation S020 of processing the descriptive dataset so as to describe a second data structure may correspond to a user making changes which correspond to a change in the structure of the data structure described by the descriptive dataset, for example the addition, modification or deletion of an element thereof.

Fig. 2 shows a method of administering a database according to the embodiment of the invention as described above with reference to Fig. 1.

In this flow chart is shown the sequence of operations carried out in the treatment of the information unit depicted in Fig. 1, using like reference numerals to denote the operations S010, S020 and S040. The method thus comprises the step S010 of compiling a data set describing a first data structure, the step S020 of processing the descriptive data set to describe a second data structure, and the step S040 of defining the first database to comprise second data structure.

According to a variation of this embodiment, the operation of processing S020 is modified so as to include the changing of an element in the descriptive dataset 20 which relates to a data value, as distinguished from elements in the descriptive dataset which relate to the structure of the data structure, such as the names and properties of tables and columns in the data structure. The method thus comprises the step S010 of compiling a data set describing a first data structure, the step s021 of processing the descriptive data set to describe a second data structure having a data value different to a corresponding one in the first data set, and the step S040 of defining the first database to comprise second data structure.

As such, this embodiment of the invention offers a method of modifying the data contents of the first data structure.

According to a yet further variation this embodiment, the operation of processing S020 as described heretofore is modified so as to include the changing of an element in the descriptive dataset 20 which relates to the structure of the first data structure, as distinguished from elements in the descriptive dataset which relate to the data values as such that may be found in the first data structure, in particular the values found in particular tuples or rows of the data structure. The method thus comprises the step S010 of compiling a data set describing a first data structure, the step s022 of processing the descriptive data set to describe a second data structure having a structural feature different to a corresponding one in the first data set, and the step S040 of defining the first database to comprise second data structure.

As such, this embodiment of the invention offers a method of modifying the structure of the first data structure.

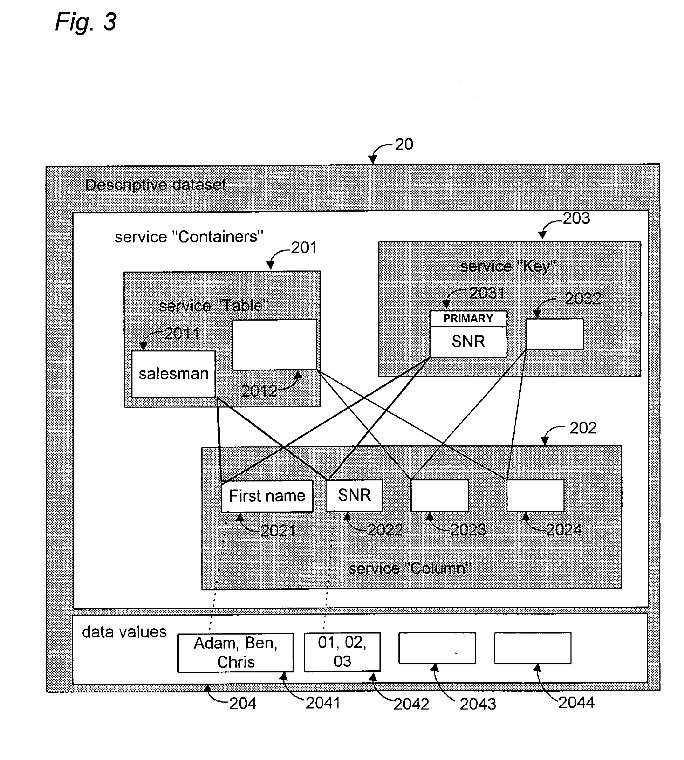

Fig. 3 shows details of a possible realisation of the descriptive dataset structure 20 as used according to the above embodiments. It is noted that the further details of Fig. 3 constitute examples only and should not be construed as limiting the invention.

The structure in Fig. 3 is based on an API architecture, in which the structure elements of a dataset are described in terms of the tables, columns and keys of which the dataset structure is comprised. The dataset comprises entries relating to the different tables found in the dataset, in the service "table" for example the table salesman 2011. Similarly, the service "key" contains information relating to the keys defined for the dataset, such as a primary key SNR 2031 further information relating to the columns in the dataset are stored in the service "column", such as the columns first name 2021 and SNR 2022. The entries in the respective services contain references to the entries to the other services, with which they have a structural relationship, for example the entry salesman 2011 in the service "table" 201 makes reference to the entries first name 2021 and SNR 2022 in the service "column" 202, indicating that the salesman table comprises two columns, a first name column and an SNR column. The descriptive dataset 20 further comprises a data value field, in which are stored the data values associated with the columns defined in the service "column" 202.

It is by making changes to the entries in the respective services, for example by adding new entries, removing entries, or changing the references made in any particular entry so as to refer to different entries in other services, that the manipulation of the descriptive dataset so as to describe a second data structure, at step 020 is achieved.

### the descriptor principle

The descriptor is a special kind of API object, which is defined for example in the Staroffice RTM API, which mirrors the structure of the object which should be appended to a container object. This means that a descriptor, once created, can be appended more than once, with only small changes to the structure. For example, when appending columns to the columns container, we could create one descriptor with

[IDL com::sun::star::sdbcx::XdataDescriptorFactory],

set the needed properties, append the descriptor at the container, reset some properties, like the name, append the modified descriptor again at the container, and repeat the steps as often as needed; therefore, we only need to create one descriptor to append more than one column.

One important use of the StarOffice API SDBCX layer is that it is possible to programmatically create tables, along with their columns, indexes, and keys. This API element is also well suited to the definition of a descriptive dataset according to the present invention.

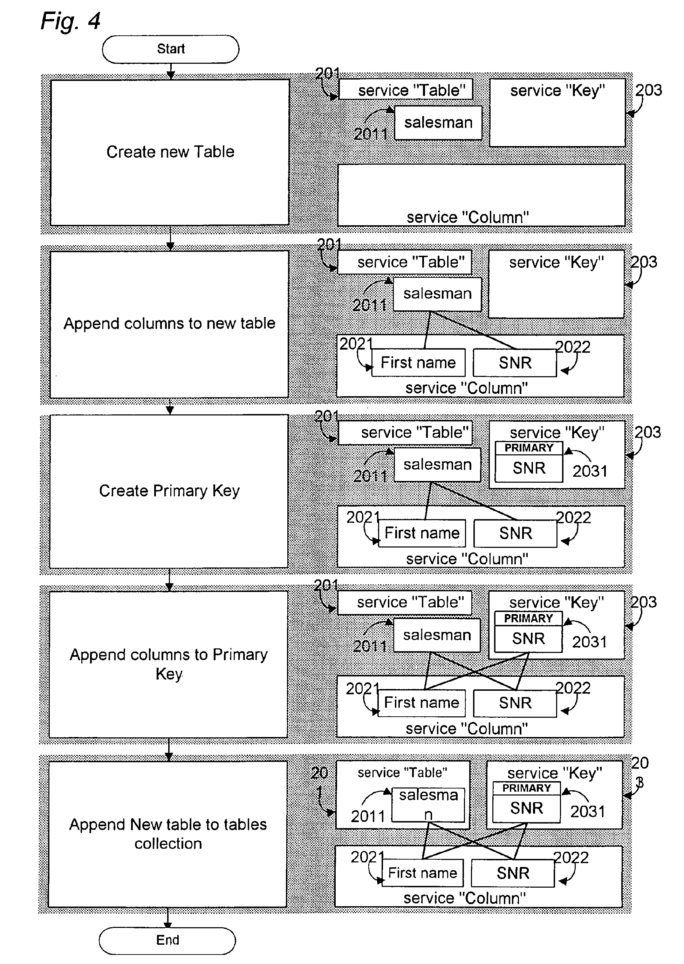

The creation of a descriptor within the Staroffice API will now be described by way of example with reference to Fig. 4.

The way to create a table is the same as creating a table with a graphical table design, and to do it programmatically is no more complicated. First, a table object is created by asking the tables container for its

[IDL com::sun::star::sdbcx::XDataDescriptorFactory]

interface. What is provided when calling the createDataDescriptor method is the

[IDL com::sun::star:: beans ::XPropertySet]

interface of a object which implements the service

[IDL com::sun::star::sdbcx::TableDescriptor].

As described above, this descriptor is used to create a new table in the database. This can be done by simply appending the descriptor to the table's container. Before the descriptor is appended, it is necessary to append, at least, a column to the table descriptor. This is done the same as with all kinds of containers used in the SDBCX layer. On the column object, some properties need to be set, such as Name, Type, and others. The column name must be unique, in the columns container.

After the columns are appended, it is possible to append the TableDescriptor object to its container or you may define some key objects, such as a primary key.

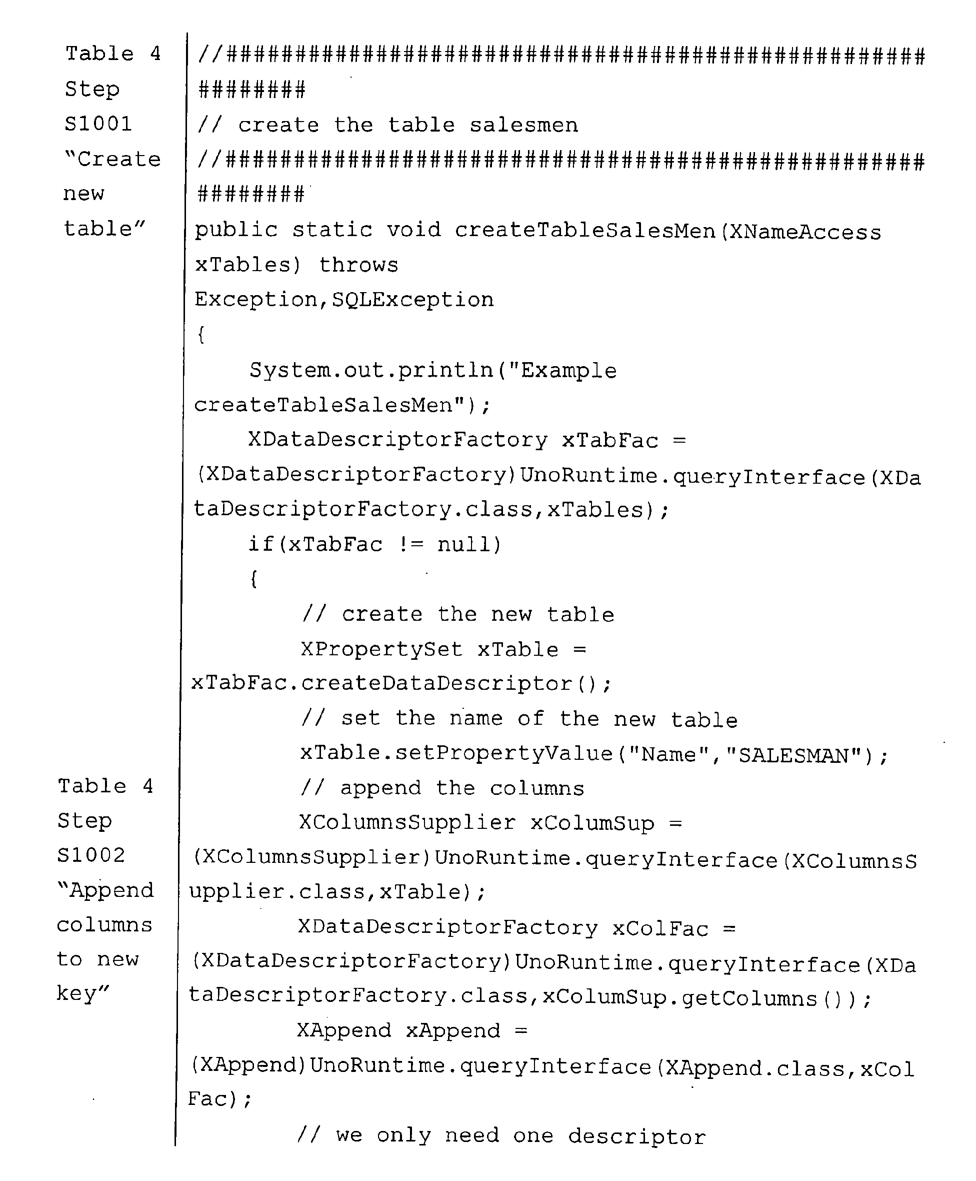

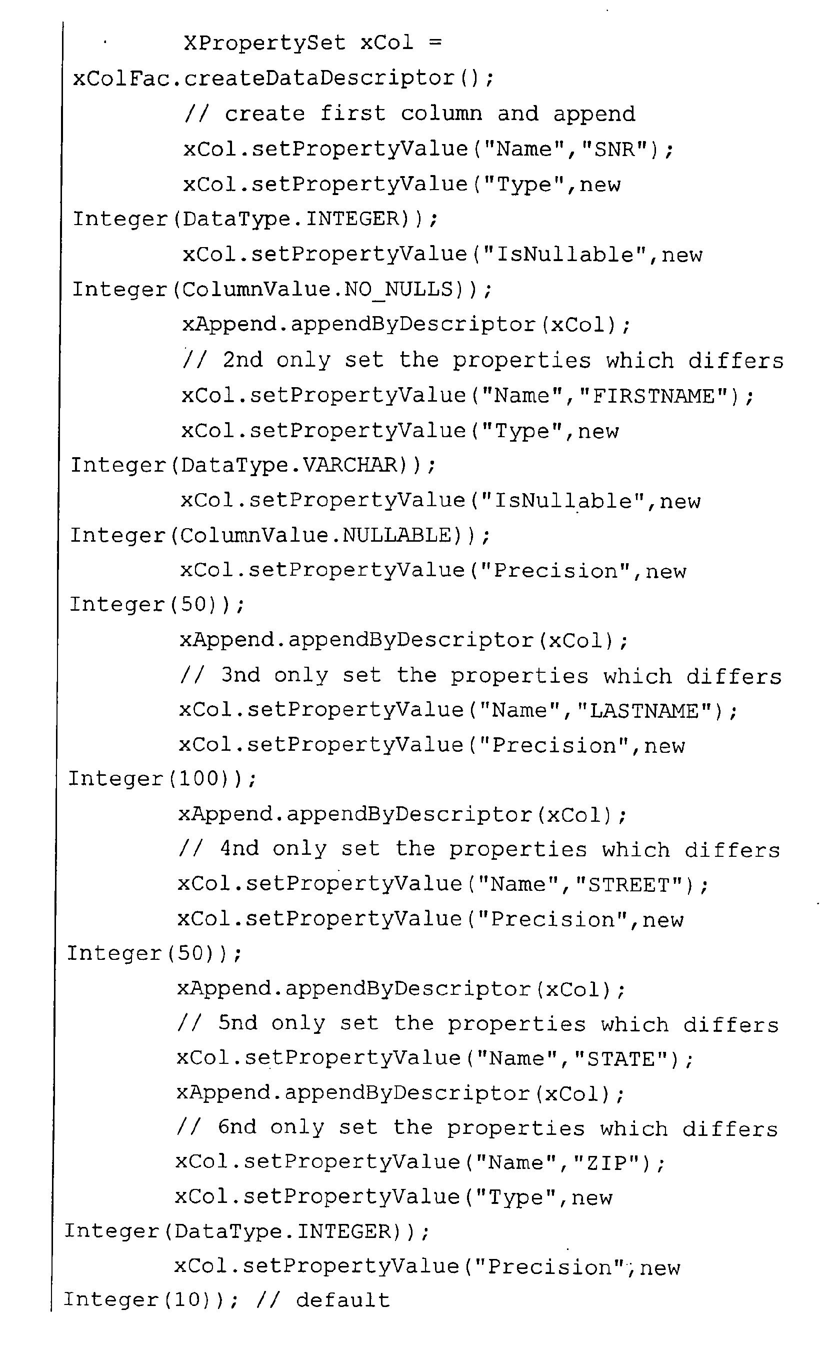

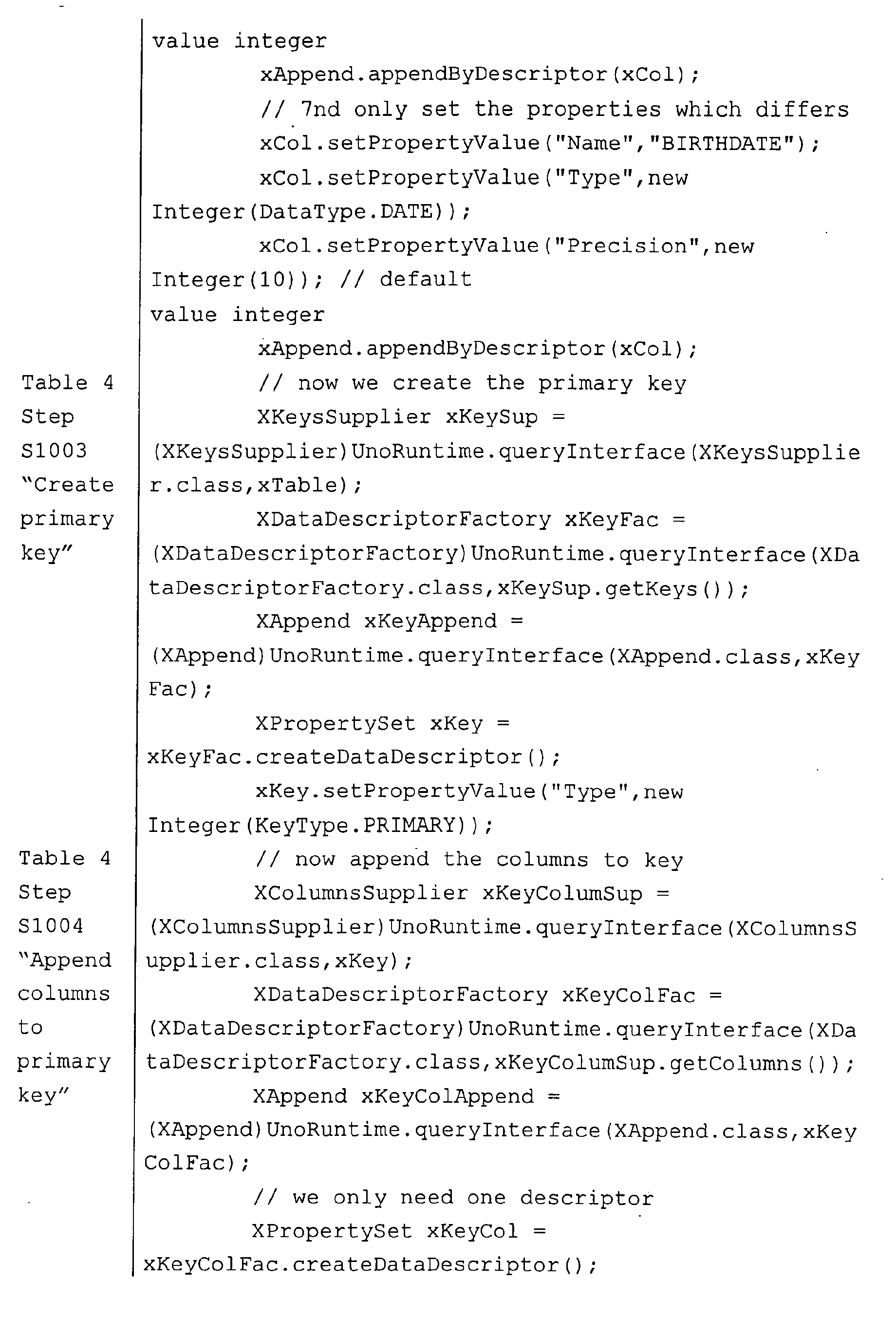

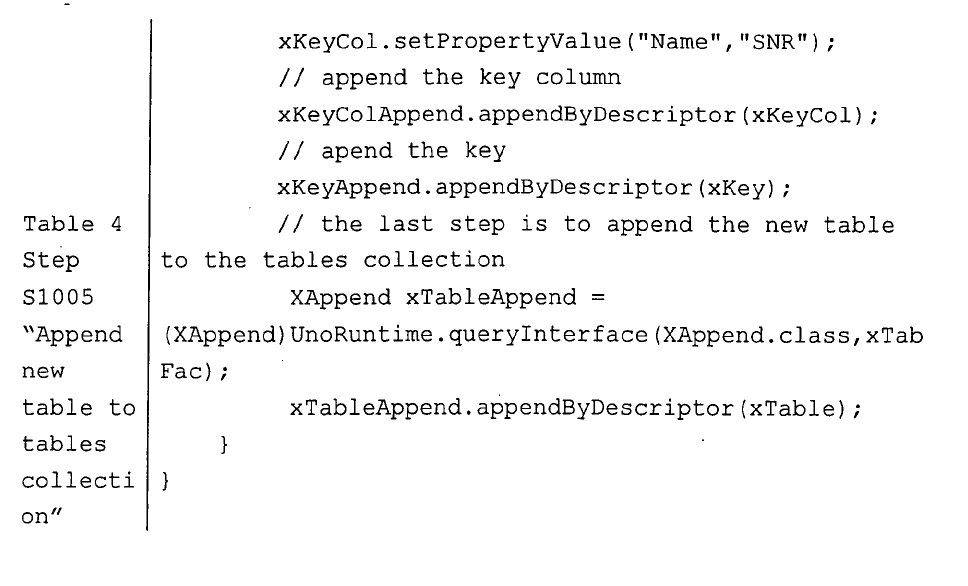

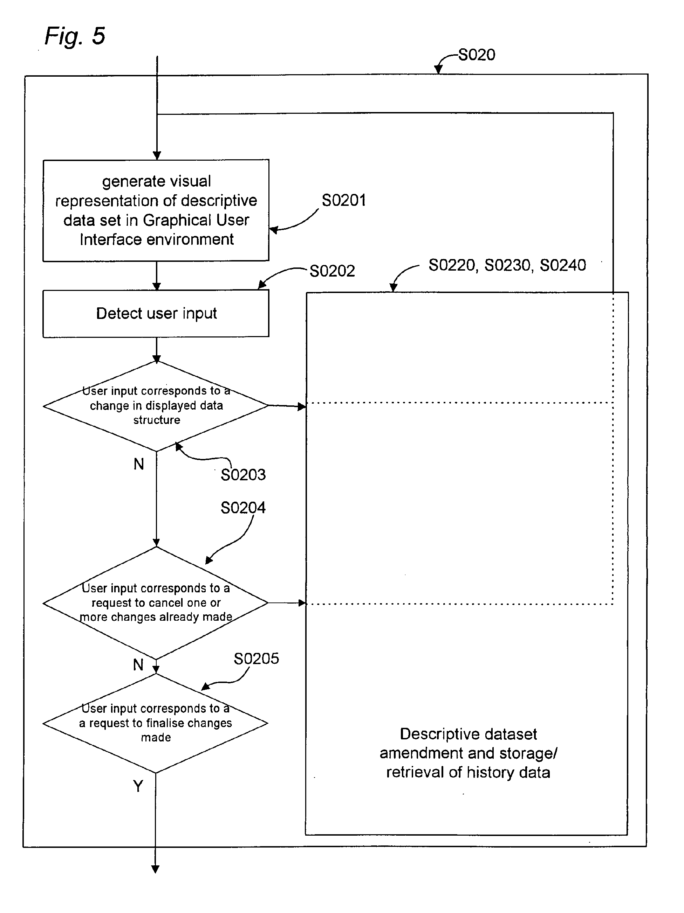

Fig. 5 shows in further detail the steps which may make up step S020 of the method of Fig. 2.

According to the method shown schematically in this figure, a graphical representation of the descriptive dataset 20 is generated, and presented to a user in a graphical user interface environment for example on a computer screen. The visual representation may comprise for example one or more tables, labelled in a manner corresponding to the named assigned to the corresponding element in the descriptive dataset 20.

There may further be provided means for interacting with the representation, in any of the known methods associated with such user interfaces. For example, there may be provided a variety of buttons, slide a bars, drop down boxes, text boxes, menus and so on, with which the user may interact by means of keyboard inputs, mouse motion, and mouse button activations, mouse scroller wheel inputs, voice recognition commands, touch sensitive screen or pad inputs etc. By means of these interface elements and input devices, the user may modify the visual representation presented to him, so that the representation takes on the form of the data structure that the user desires, based on the original data structure. The step S020 shown in Fig. 5 therefore further has a step S0202 of detecting user input, and where this user input involves a change to the visual representation, which corresponds to a change in the displayed data structure returning to the step S0201, of generating the visual representation, such that the visual representation comprises the requested changes corresponding to the user input detected at step S0202. When a user input corresponding to a change in the displayed data structure is thus detected at step S0203, before the visual representation is generated, data relating to the amendment is stored at a step labelled S0220, S0230, or S0240.

If user input is detected at S0202, but at S0203 it is found that this user input does not correspond to a change in the displayed data structure, the method of step S020 proceeds to step S0204, wherein it is determined whether the user input detected at step S0202 corresponds to a request to cancel one or more of the changes to the descriptive dataset already made, at a previous iteration of step S020. Where it is found that the detected user input does correspond to such a request, the method of step S020 proceeds once more to step S0220, S0230 or S0240, wherein it retrieves the data relating to previous amendments stored as described above, and using this information, amends the descriptive dataset such that on returning to step S0201, a new visual representation can be generated wherein the previous changes are cancelled.

Where it is found that the user inputs detected at step S0202 further does not relate to user inputs corresponding to a request to cancel one or more changes already made, the method of step S0205, wherein it is determined whether the user inputs detected correspond for a request to finalise the changes made. Where it is detected that the detected user input does indeed correspond to such a request, the method of step S020 is terminated, and the process is then able to proceed to the next step, for example step S040.

Discussed above, step S020 may comprise one of a plurality of steps, S0220, S0230 or S0240.

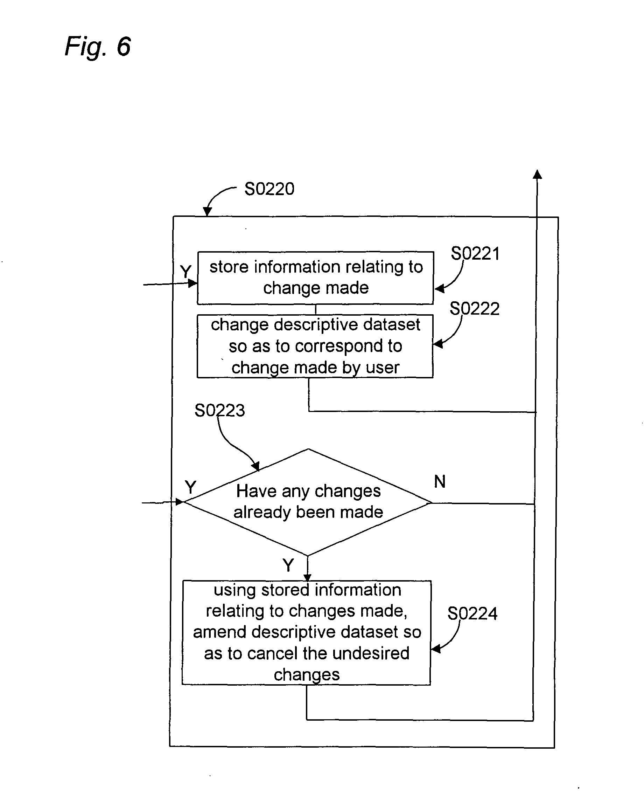

Fig. 6 shows details of step S0220 as referred to above.

According to the method of step S0220, when at step S0203 it is determined that a user input detected at step S0202 corresponds to a change in the displayed data structure, the method proceeds to step S0221, wherein information relating to the change made is stored, before proceeding to step S0222 wherein the descriptive dataset is changed to correspond to the change made by the user to the visual representation, where upon the method then exits step S0220, and proceeds to step s0201, wherein a visual representation of the new description dataset is generated.

When it is determined that user input detected at step S0202 corresponds to a request to cancel one or more changes already made at step S0204, the method proceeds to step S0223, where it is determined whether any changes liable to be cancelled have already been made to the descriptive dataset. Where it is determined that no such changes have been made, the method exits step S0220 without further action. Where it is determined that changes have been made to the descriptive dataset which are liable to be cancelled, the method proceeds to step s0224, wherein using stored information relating to changes made, as stored at step S0221, the descriptive dataset is amended so as to cancel the undesired changes, before the method exits steps S0220, and proceeds to step S0201, so as to generate a visual representation of the descriptive dataset, with the undesired changes removed.

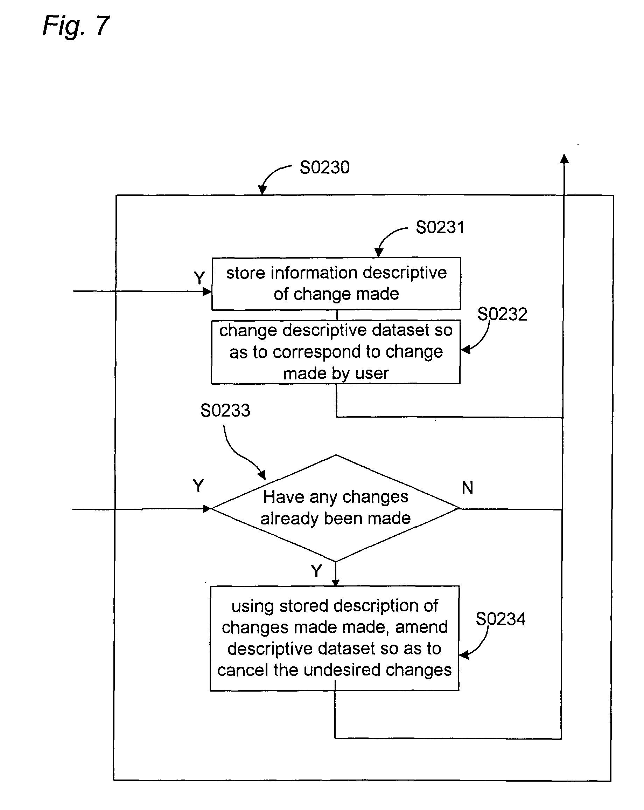

Fig. 7 shows details of step S0230 as referred to above, and relates to a possible realisation of the method of step S0220.

According to the method of step S0230, when at step S0203 it is determined that a user input detected at step S0202 corresponds to a change in the displayed data structure, the method proceeds to step S0231, wherein information describing the change made is stored, before proceeding to step S0232 wherein the descriptive dataset is changed to correspond to the change made by the user to the visual representation, whereupon the method then exits step S0230, and proceeds to step S0201, wherein a visual representation of the new description dataset is generated.

When it is determined that user input detected at step S0202 corresponds to a request to cancel one or more changes already made at step S0204, the method proceeds to step S0233, where it is determined whether any changes liable to be cancelled have already been made to the descriptive dataset. Where it is determined that no such changes have been made, the method exits step S0230 without further action. Where it is determined that changes have been made to the descriptive dataset which are liable to be cancelled, the method proceeds to step s0224, wherein using the stored description of the changes made, as stored at step S0231, the descriptive dataset is amended so as to undo the undesired changes, before the method exits steps S0230, and proceeds to step S0201, so as to generate a visual representation of the descriptive dataset, with the undesired changes reversed.

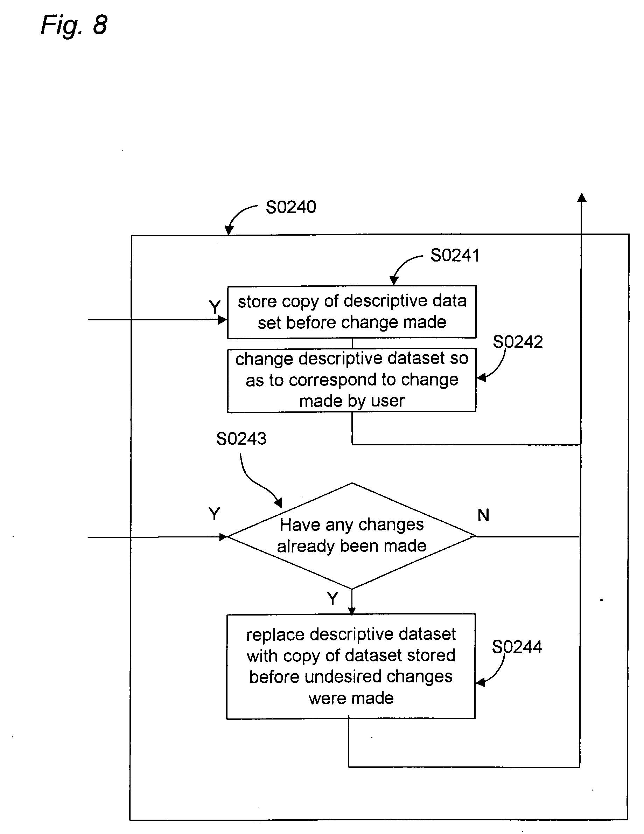

Fig. 8 shows details of step S0240 as referred to above, and relates to an alternative realisation of the method of step S0220

According to the method of step S0240, when at step S0203 it is determined that a user input detected at step S0202 corresponds to a change in the displayed data structure, the method proceeds to step S0241, wherein a copy of all or part of the descriptive data set is stored, before proceeding to step S0242 wherein the descriptive dataset is changed to correspond to the change made by the user to the visual representation, whereupon the method then exits step S0240, and proceeds to step S0201, wherein a visual representation of the new description dataset is generated.

When it is determined that user input detected at step S0202 corresponds to a request to cancel one or more changes already made at step S0204, the method proceeds to step S0243, where it is determined whether any changes liable to be cancelled have already been made to the descriptive dataset. Where it is determined that no such changes have been made, the method exits step S0240 without further action. Where it is determined that changes have been made to the descriptive dataset which are liable to be cancelled, the method proceeds to step S0244, wherein the descriptive data set is replaced by, or amended to correspond to, the copy of the data set stored at step S0241, before the method exits steps S0240, and proceeds to step S0201, so as to generate a visual representation of the descriptive dataset, without undesired changes.

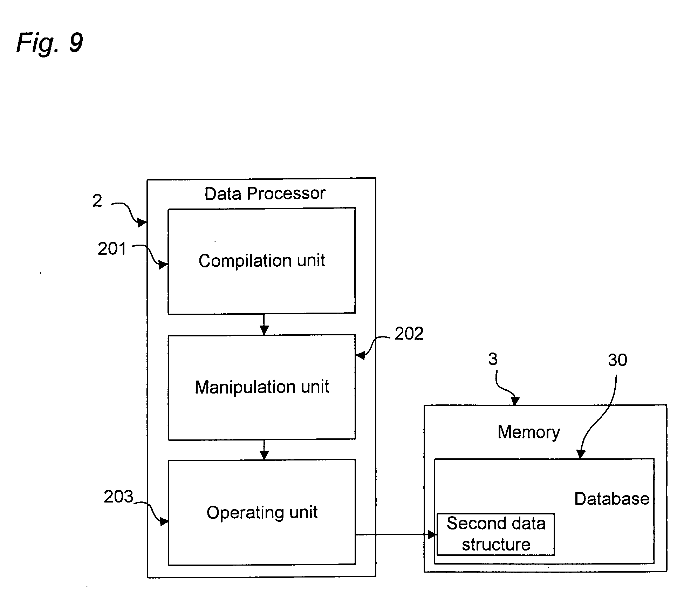

Fig. 9 shows a data structure manipulation system according to an embodiment of the present invention.

The system comprises a compiler 201, for compiling a dataset descriptive of a first data structure, a processor 202, for processing said dataset so as to describe a second data structure 31, an operating unit 203, for operating on at least a part of a database 30 so that it comprises said second data structure, and a memory for storing said database.

Further details will now be described by way of example, and should not be construed as limiting the scope of the invention. The first data structure may comprise elements associated with a database such as discussed above, for example one or more tables comprising one or more columns.

The compiler 201, processor 202 and operating unit 203, may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. The compiler, processor and operating unit may further comprise any combination of the above forms.

In the present application, the terms compiler and processor may relate to arrangements configured to perform solely the tasks specifically attributed to them, and not necessarily be interpreted as relating to devices known in the art which may commonly be referred to in similar terms.

As one example, the compiler 201, processor 202 and operating unit 203 may all be housed in a computer system, such as a desktop personal computer.

The compiler is adapted to perform the action of compiling a dataset descriptive of a first data structure. This may for example involve the generation of a description of the data structure in terms of API elements as discussed above, for example in terms of Star Office API elements. The elements of the first data structure that are selected by the compiler for representation may comprise structural elements, such as the names and properties of tables, or the columns of which they are made up, and may further comprise the data values that may be stored in the rows, or tuples of table in the first data structure.

The processor is adapted to perform the action of processing the descriptive dataset produced by the compiler 201, such that the data structure it described is modified. Where the descriptive dataset generated by the compiler 201 is in terms of API elements, the processor may process the descriptive dataset by modifying the properties of the API elements used in the description, as well as the addition of new API elements to the description, and the removal of one provided by the compiler 201.

The processor may also be adapted to provide a representation of the data structure described by the descriptive dataset to a user, for example in the form of a computer print out, or as an image or set of images displayed on a computer display device such as a VDU.

The processor may further be adapted to store one or more copies of the descriptive dataset at intervals throughout the processing procedure, such that if at any stage it is decided that any of the changes made to the descriptive dataset are not in fact required, it is possible to revert to a copy of the descriptive dataset recorded prior to the undesired change. Alternatively, a record of the applied changes themselves may be recorded, such that if at any stage it is decided that any of the changes made to the descriptive dataset are not in fact required, it is possible to regenerate the descriptive dataset in the form in which it would exist if the undesired change had never been made, or to revert to a copy of the descriptive dataset recorded prior to the undesired change.

The changes made to the descriptive dataset by the processor may be made at the instigation of a user. Where this is the case, the processor may be further adapted to accept instruction from the user by means of for example a keyboard or a mouse, possibly in connection with a Graphical User Interface. Where the processor is also adapted to provide a representation of the data structure described by the descriptive dataset to a user as an image or set of images displayed on a computer display device such as a VDU, it may be possible for the user to make changes to the image or set of images displayed on a computer display device, whereby such changes are correspondingly applied to the descriptive dataset.

The memory 3 may take the form of any conventional data storage device, such as a Random Access Memory, a hard drive, etc. Where the compiler 201, processor 202 and operating unit 203 are housed in a computer system, such as a desktop personal computer, the memory may also be housed in that computer system. The transfer of information from the operating unit 203 to the memory 204 is shown by an arrow between the respective elements, which should not be interpreted as excluding bi-directional communication.

Alternatively, the memory may be provided at some other location, for example in a separate Server computer, or in a stand-alone data storage device such as a virtual jukebox. Where this is the case, it will be necessary to provide a means allowing data transfer at least from the operating unit to the memory. This may comprise a Local Area Network, or some other Network arrangement such as the World Wide Web.

The different processes performed in the described embodiments may be divided between a server, for example a server 102 at which the memory 204 is provided, and a client station, for example the user station 103. By way of example the Compiler 201, Processor 202 and Operating unit 203 may all be situated in a user station 103, and the Memory 204 in the Server 102. Alternatively, the Compiler 201 and the Processor 202 may all be situated in a user station 103 and the Memory 204 and the Operating unit 203 in the Server 102.

Alternatively, the Operating unit 203 and the Processor 202 may all be situated in a user station 103 and the Memory 204 and the Compiler 201 in the Server 102.

Alternatively, the Processor 202 may be situated in a user station 103 and the Memory 204, the Compiler 201 and the Operating unit 203 in the Server 102.

The functions of any individual unit as described above may also be split between the Client and Server.

In any case, the operating unit is adapted to operate so as to cause the Database 205 to reflect the second data structure described by the descriptive dataset after processing. This operation may take the form of the transmission of a series of SQL commands as discussed above. Where the description of the Data structure has been realised in terms of API elements as discussed above or otherwise, it may also be necessary for the operating unit to translate or interpret the descriptive dataset so as to generate SQL instructions

The first data structure may be accessible by a plurality of processes simultaneously, some or all of which processes may be in accordance with embodiments of the present invention.

The first database may be accessible by a plurality of processes simultaneously, some or all of which processes may be in accordance with embodiments of the present invention.

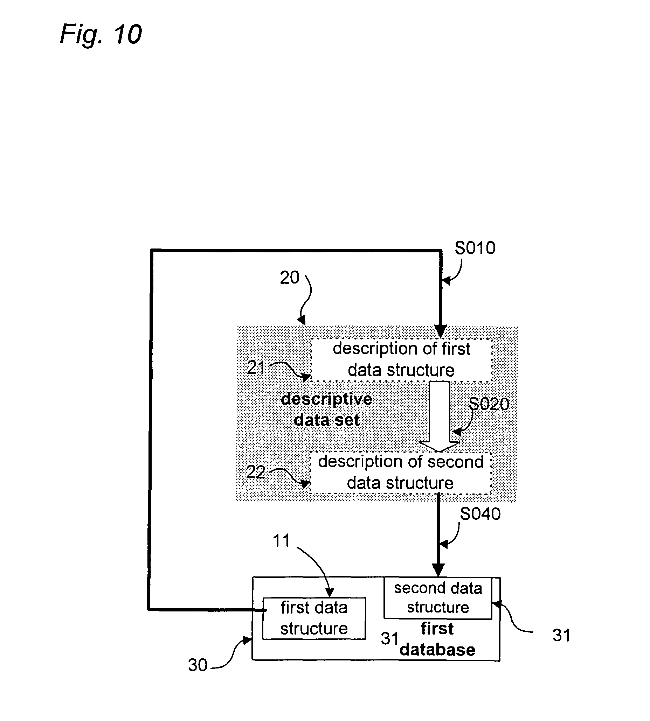

Fig. 10 shows the flow of information in a method of administering a database according to a further embodiment of the invention.

According to this embodiment, a description 21 of the first data structure is compiled in an operation S010, from a first data structure 11, which is a part of the first database, 30.

This description of the first dataset is then processed so as to describe a second data structure, in the operation S020, to form a new description 22, the first database 30 is then operated upon in an operation S040, so that it comprises the second data structure, described by the description of the second data structure 22.

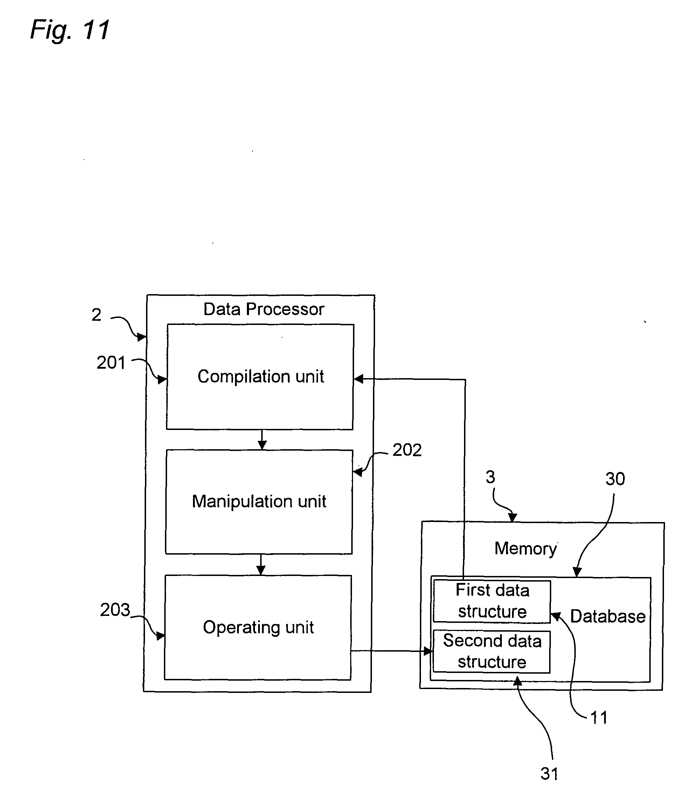

Fig. 11 shows a further development of the embodiment of the present invention described above with reference to Fig. 9.

In this embodiment, the database 30 further comprises a first data structure 11, from which the compilation unit 201 in the data processor 2 extracts information necessary to compile the descriptive dataset.

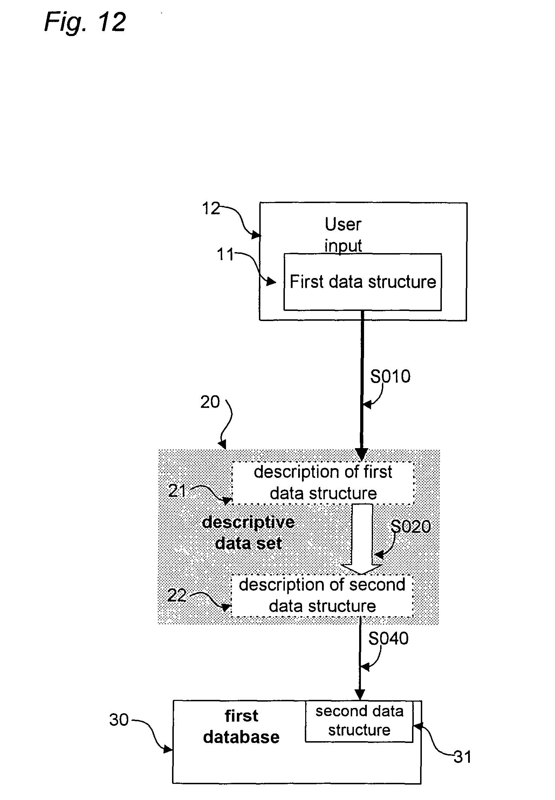

Fig. 12 shows the flow of information in a method according to a further embodiment of the invention.

According to this embodiment, a description 21 of the first data structure is compiled in an operation S010, from a first data structure 11, which is defined by a user. This description of the first dataset is then processed so as to describe a second data structure, in the operation S020, to form a new description 22, a database 30 is then operated upon in an operation S040, so as to comprise the second data structure, described by the description of the second data structure 22.

The definition of the first data structure by a user may involve manual data entry, for example using standard computer user interface techniques such as keyboard entry, point and click with a curser control device etc. In particular, this definition process may involve the generation of a graphical representation of aspects of the first data structure, for example as displayed on a computer's VDU.

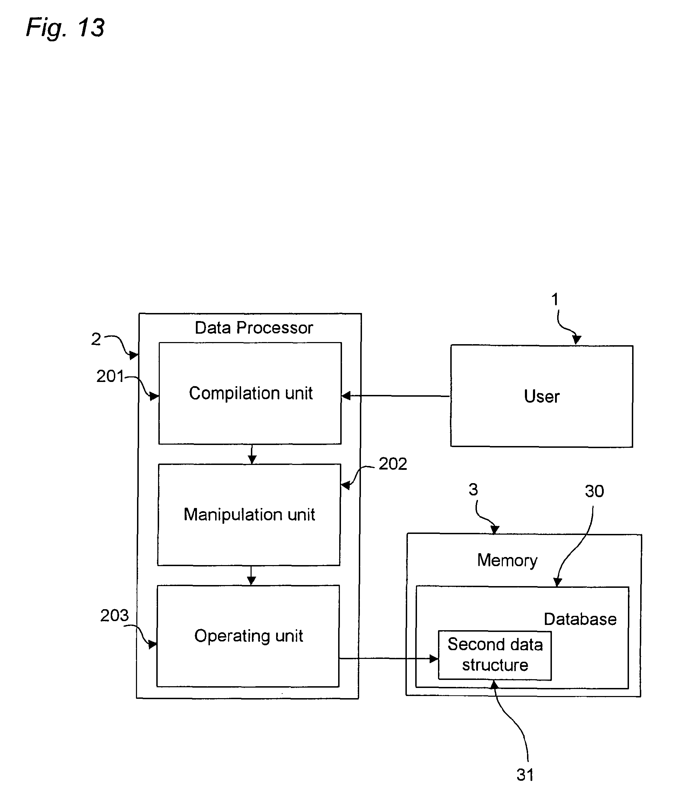

Fig. 13 shows a development of the embodiment of the present invention as discussed with regard to Fig. 9.

According to this development, the compilation unit 201 receives data directly from a user 1, in order to compile the descriptive dataset. The user may provide information to the compilation unit in the form of data entered through a keyboard, or by the users interaction with a graphical user interface by means of a mouse, graphics tablets or similar device or in any other data input method as will readily occur to the skilled person.

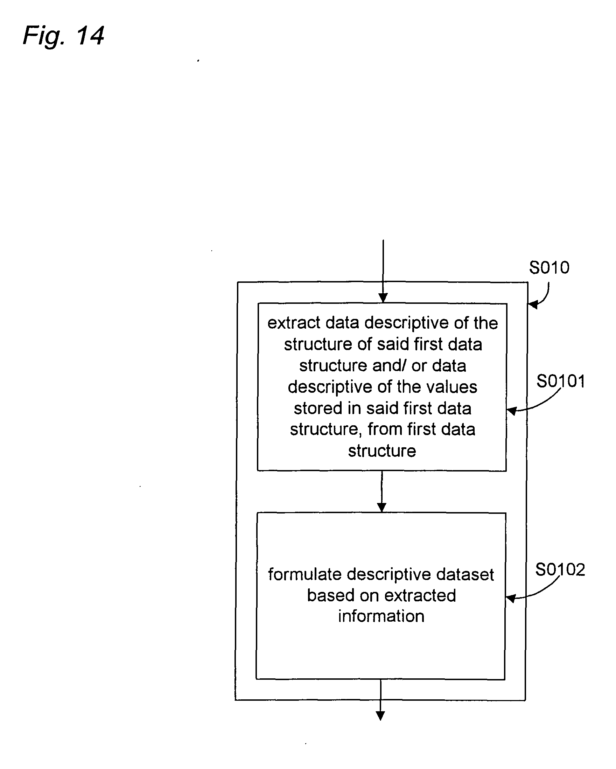

Fig. 14, shows further detail of the steps involved in the method of step S010 as described for example with reference to Fig. 2 according to one embodiment of the invention.

According to this embodiment, step S010 comprises two sub-steps S0101 and step S0102, which involve the extraction of data descriptive of the structure of the first data structure 11 and/or data descriptive of the values stored in said first data structure 11 from the first data structure, and formulating a descriptive dataset based on the extracted information.

The extraction of data from the dataset may involve data mining or other analytical techniques and may require input from a user, in order to identify what parts of the first data structure are required to be represented in the descriptive dataset. The formulation of the descriptive dataset might involve the generation of a new stand alone database, or the formulation of a description in terms of a relational or objected oriented description language. This step may also require intervention from a user, for example in the form of a user selecting from various options relating to the form in which the descriptive dataset is to be represented.

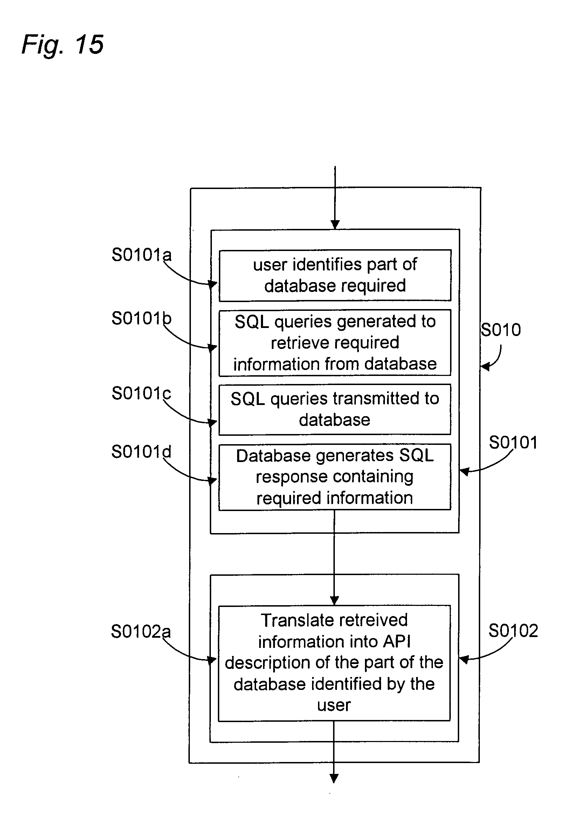

Fig. 15 shows one possible more detailed realisation of the steps S0101 and S0102 of the method of step S010.

According to this method, step S0101 further comprises steps S0101A for indicating the part of the database required, e.g. on the basis of a user input operation, the step S0101B of SQL queries being automatically generated so as to retrieve the necessary information from the database, the step S0101C of transmitting the SQL queries thus generated to the database, and S0101D of the database generating SQL responses to the SQL queries, containing the requested information. The step S0102 comprises the sub-step S0102A, of translating the information transmitted at S0101D into a description of the part of the database identified by the user in terms of API elements as described above.

The use of API language to describe the dataset has the advantage that the structure thus described can be readily interpreted and presented by software using the same or a related API, or otherwise, that the descriptive dataset is in any case in a format which is well known and documented.

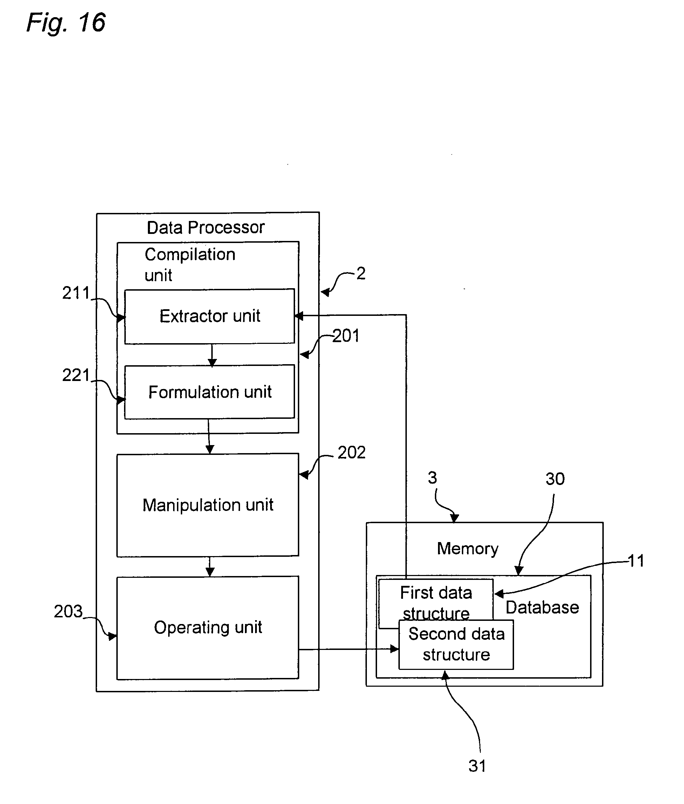

Fig. 16 shows a data structure manipulation system according to another embodiment of the invention.

The system comprises a compiler 201, for compiling a dataset descriptive of a first data structure, a processor 202, for processing said dataset so as to describe a second data structure 31, a operating unit 203, for defining at least a part of a database 205 so as to comprise said second data structure and a memory, for storing said database.

The compiler 201 further comprises an extractor unit 211 for extracting information from said first data structure, and a formulation unit 221 for formulating said dataset so as to describe said first data structure based on said extracted information.

The compiler is adapted to perform the action of compiling a dataset descriptive of a first data structure. To do this, it is provided with an extractor unit 211, which extracts information from the first database 30 relating to the part thereof which is intended for manipulation. This extraction may be carried out for example by means of SQL commands and messages as discussed above. The compiler is further provided with a formulation unit 221, which formulates a description of the information retrieved, or the part of the first database 30 represented thereby, by the extraction unit. This may for example involve the generation of a description of the data structure in terms of API elements as discussed above, for example in terms of Star Office API elements. The elements of the first data structure that are selected by the compiler for representation may comprise structural elements, such as the names and properties of tables, or the columns of which they are made up, and may further comprise the data values that may be stored in the rows, or tuples of table in the first data structure.

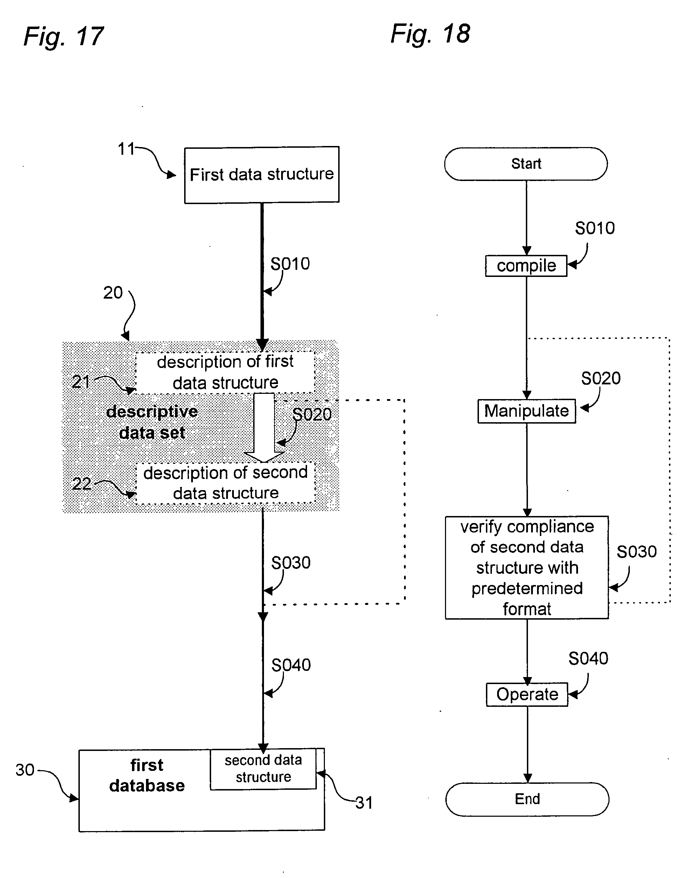

Fig. 17 shows the flow of information in a method according to a further embodiment of the invention.

This method corresponds to the flow of information according to the embodiment of the invention as described with reference to Fig. 1, but further comprises the additional operation S030 of verifying whether the descriptive dataset describes a structure that complies with a predetermined format after said operation S020 of processing and prior to the operation of defining S040.

The format with which compliance is verified may be for example a set of predefined rules. The format may further be a theoretical ideal as determined using for example normalization techniques, for example the Normal Forms as described above.

Fig. 18 shows a method of administering a database according to the embodiment of the invention shown in Fig. 17.

This method corresponds to the method according to the embodiment of the invention as shown in Fig. 2, but further comprises the additional operation S030 of verifying whether the descriptive dataset describes a structure that complies with a predetermined format after said operation S020 of processing, and prior to the operation of defining S040. The method thus comprises the step S010 of compiling a data set describing a first data structure, the step S020 of processing the descriptive data set to describe a second data structure, the step s030 of verifying compliance of the second data structure with a predetermined format and the step S040 of defining the first database to comprise second data structure.

The format with which compliance is verified may be for example a set of predefined rules. The format may further be a theoretical ideal as determined using for example normalization techniques, for example the Normal Forms as described above.

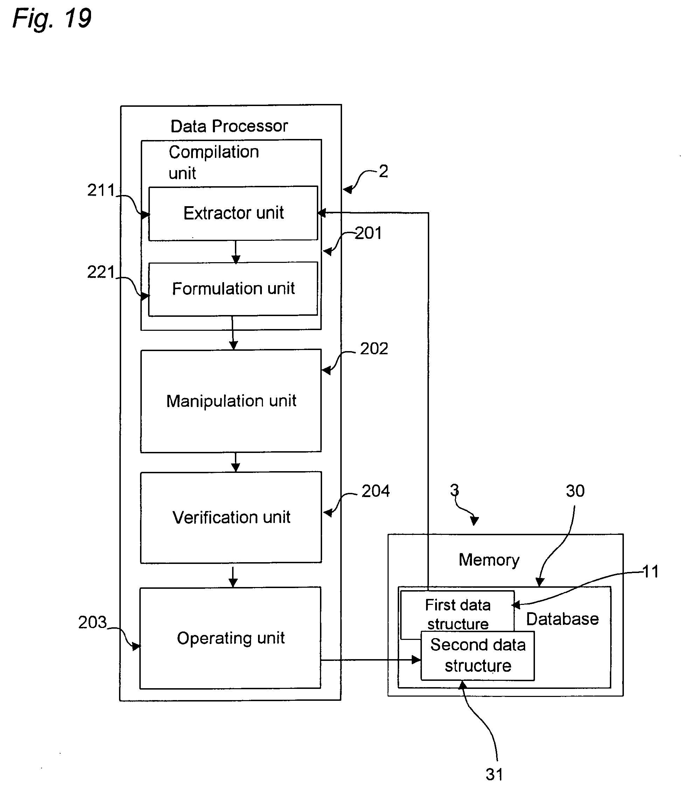

Fig. 19 shows a system for the administration of a database according to the embodiment of the invention shown in Fig. 16.

This system corresponds to the method according to the embodiment of the invention as shown in Fig. 1, but further additionally comprises a verification unit 204, which is adapted to verify whether the descriptive data set describes a structure that complies with a predetermined format. This verification unit is disposed so as to verify the descriptive data set as output from the manipulation unit 202, and after verifying the compliance with the predetermined format of the descriptive data set, to pass the descriptive data set on to the operating unit 203.

The data processor system as a whole therefore comprises a compilation unit 201, itself comprising an extractor unit 211 for extracting data from a first data structure 11, a formulation unit 221, for formulating the data extracted from the first data structure in a predetermined manner, a manipulation unit, for manipulating the descriptive data set according to user commands, a verification unit 204 for verifying the compliance of the descriptive data set thus manipulated with a predetermined format, and an operating unit 203, for operating on a second data structure 31, such that the second data structure comprises the descriptive data set as manipulated by the manipulation unit 202 and verified by the verification unit 204.

The format with which compliance is verified may be for example a set of pre-defined rules. The format may further be a theoretical ideal as determined using for example normalization techniques, for example the normal forms as described above.

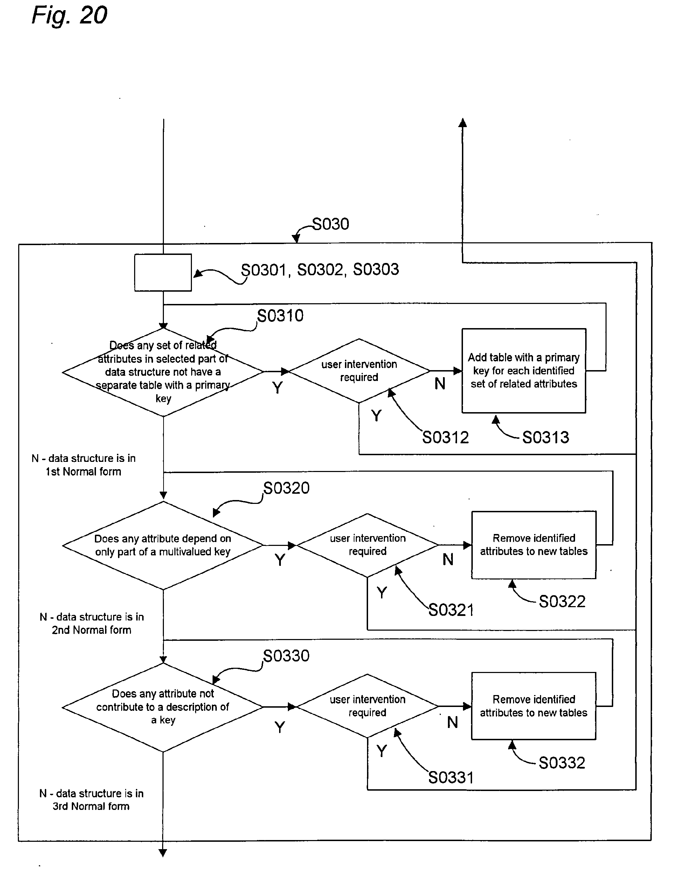

Fig. 20 shows in further detail one method of carrying out the step S030 of verifying compliance of the description of the second data structure with a predetermined format.

According to this embodiment of the invention, the format with which compliance is verified comprises the first, second and third normal forms as described above. According to the method of step 030 shown in Fig. 20, there is first performed a step S0301, S0302, or S0303, of acquiring any necessary further information in addition to the descriptive data set, necessary for the verification of the compliance of the descriptive data set with the normal forms.

It is then determined at step S0310, whether any set of related attributes in the descriptive data set, or selected part thereof, lacks a separate table with a primary key. If it is determined that any set of related attributes does not have a separate table with a primary key, the method proceeds to step S0312, where it is determined whether it is necessary or desirable for changes to be made by the user to the descriptive data set so as to address the lack of separate tables with primary keys, or whether this can be dealt with automatically. Where it is determined that user intervention is required, the method exits step S030, and returns to the manipulation step S020. Otherwise, the method proceeds to S0313, wherein a table with a primary key is added for each identified set of related attributes not already having such a structure.

The method then returns to step S0310. When it is determined that all related attributes in the descriptive data set have a separate table with a primary key, it can be determined that the data structure is in the first normal form. The method then proceeds to step S0320, where it is determined whether any attributes in the descriptive data set depends on only part of a multi-valued key. If it is determined that any attributes in the descriptive data set does depend on only part of a multi-valued key, the method proceeds to step S0321, at which it is determined whether it is desirable for this situation to be rectified by the user directly, or whether the situation can be satisfactorily resolved by automatic means. Where it is determined that user intervention is required, the method exits step S030 and returns to the manipulation step S020. Otherwise, the method proceeds to step S0322, wherein the attributes identified as depending on only part of multi-valued keys are removed to new tables.

The method then returns to step S0320. If it is determined that no attribute depends on only a part of a multi-valued key, it can be concluded that the data structure is further in the second normal form. The method then finally moves to step S0330, at which it is determined whether any attribute does not contribute to a description of a key. Where it is determined that an attribute does not contribute to a description of the key, the method proceeds to step S0331, where it is determined whether this situation can be best dealt with by the user, or whether the situation can satisfactorily be rectified automatically. Where it is determined that user intervention is required, the method exits step S030, and returns to the manipulation step S020. Otherwise, the method proceeds to step S0332, wherein the attributes identified as not contributing to a description of a key are removed to new tables.

The method then returns to step S0330. When it is determined that no attribute fails to contribute to a description of a key, descriptive data sets can be considered to conform to the third normal form. At this stage, according to this embodiment, the validation of the structure of the descriptive data set is considered to be complete, and the method exits step S030 to proceed to the operating step S040 as described above.

Clearly, it is possible to verify the conformity of the descriptive data set and the database as a whole with a variety of standards, for example including further normal forms such as those discussed above, or other database structure criteria as will occur to those skilled in the art. It may also be desirable at this stage to perform other tests as to the nature of the information in the descriptive data set so as to ensure compatibility with other databases, in-house standards or other criteria as necessary.

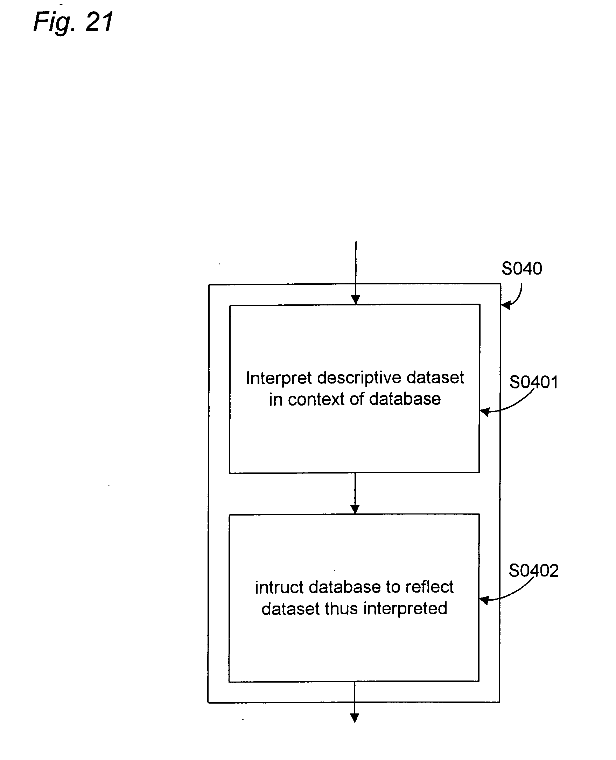

Fig. 21 shows in further detail the method of operation step S040 according to an embodiment of the invention.

According to this embodiment, the step S040 comprises two sub-steps, S0401, and S0402. Step S0401 comprises the interpretation of the descriptive data set in the context of the database. This involves the consideration of information relating to the database itself, for example the structure of the database, so that the descriptive data set can be correctly incorporated into the database, in a manner compatible with the pre-existing structure, and further relating to the environment in which the database exists, for example the database language used, the query language used, the operating system environment etc. Once the necessary information has been gathered and interpreted as step S0401, the method of S040 proceeds to step S0402, wherein the database is instructed so as to reflect the data set interpreted in the context of that database. This involves the transmission of signals to the database so as to cause modifications in the database, relating to structural and/or data changes so that after the performance of step S0402, the database includes the descriptive data set, either as new data, or as a replacement for all or part of the existing data in the database. On completing S0402, the method exits step S040.

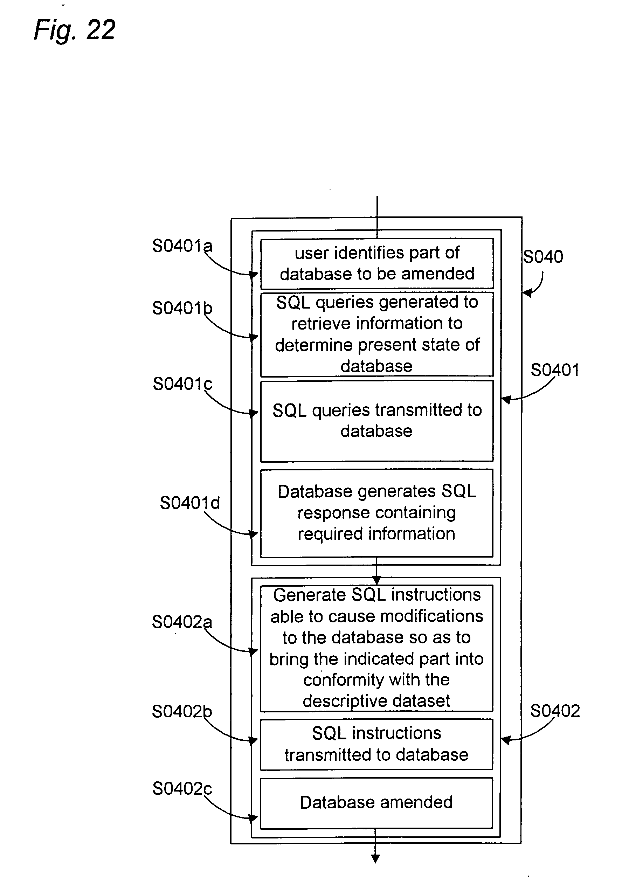

Fig. 22 shows in further detail the method of step S040 as described above with reference to Fig. 21.

According to this embodiment, step S0401 is further sub-divided into steps S0401a, S0401b, S0401c and S0401d, while step S0402 is further sub-divided into steps S0402a, S0402b and S0402c. Step S0401a includes an operation to identify the of the part of the database to be amended. This may be made by means of user interaction, or otherwise be automatically determined for example on the basis of the part of the database originally extracted to form the descriptive database.

Once this has taken place, the method proceeds to step S0401b, at which according to this embodiment, SQL queries are generated for transmission to the database, in order to request the retrieval of information relating to the present state of the database. These queries are transmitted to the database at step S0401c, and the necessary response is generated and transmitted by the database at step S0401d. The retrieved information may relate to changes made to the database since the extraction of the necessary information to generate the descriptive data set, or may simply represent the present state of the database, or a part thereof. The The retrieved information may further comprise information relating for example to what parts of the database are presently being accessed by other users, and the access rights granted these users.

The method then proceeds to step S0402, the first sub-step of which is step S0402a, at which SQL instructions are generated on the basis of information retrieved from the database at step S0401d, and the descriptive data set, intended when applied to the database, to cause it to be amended so as to incorporate the data structure described by the descriptive data set, at the appropriate location. These instructions are then transmitted to the database at steps S0402b, which is then amended accordingly at step S0402c. The method then exits step S040.

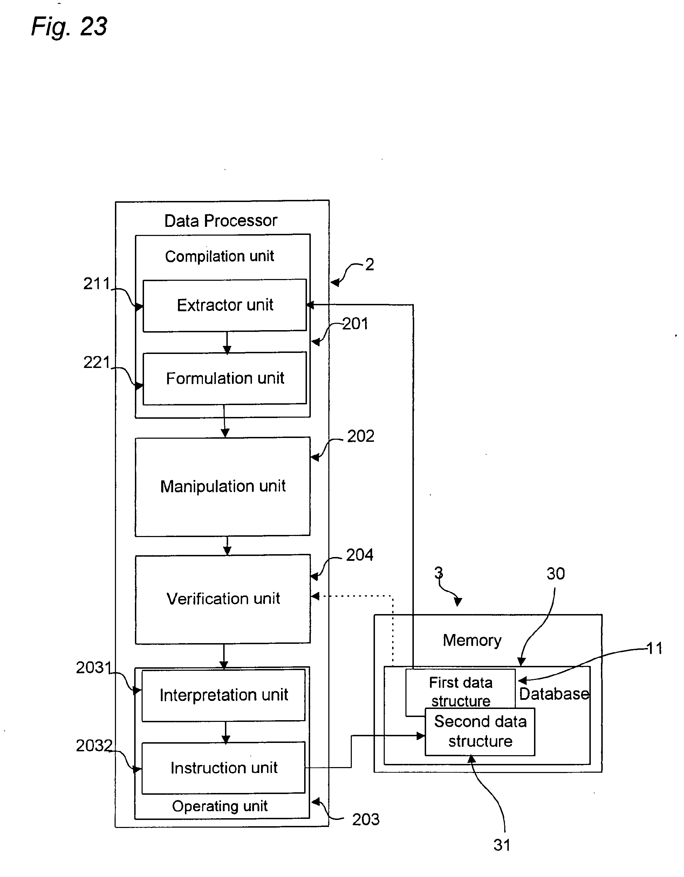

By this means, the data structure specified by the user, at the manipulation stage S020, is incorporated into the original database. Fig. 23 shows a development of the embodiment of the present invention as discussed above with reference to Fig. 19, further developed so as to incorporate in the operating unit 203, an interpretation unit 211 and an instruction unit 221, adapted to interpret the descriptive data set in the context of the database, and to instruct the database so as to reflect the database thus interpreted, respectively, as discussed with reference to Fig. 21.

Fig. 23 shows in further detail the operational units that the Operating unit 203 in the data structure manipulation system for example as described above with reference to Fig. 19 may comprise according to an embodiment of the invention.

According to this embodiment, the Operating unit 203 comprises two sub units, 2031, and 2032. The sub unit 2031 is an interpretation unit, which is adapted to perform interpretation of the descriptive data set in the context of the database. This involves the consideration of information relating to the database itself, for example the structure of the database, so that the descriptive data set can be correctly incorporated into the database, in a manner compatible with the pre-existing structure, and further relating to the environment in which the database exists, for example the database language used, the query language used, the operating system environment etc.

Once the necessary information has been gathered and interpreted by the interpretation unit 2031, information is outputted to a second sub unit 2032. The second sub unit is an interpretation unit, which is adapted to wherein instruct the database so as to reflect the data set interpreted in the context of that database. This involves the transmission of signals to the database so as to cause modifications in the database, relating to structural and/or data changes so that the database comes to include the descriptive data set, either as new data, or as a replacement for all or part of the existing data in the database.

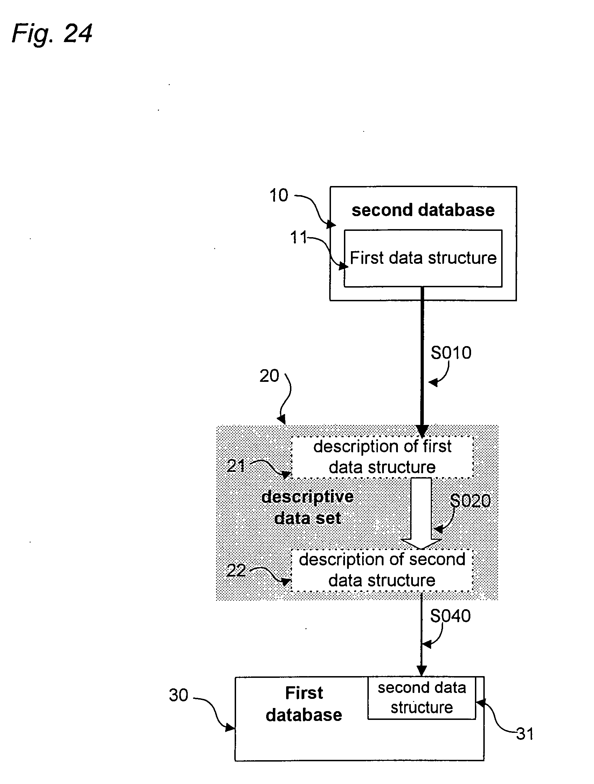

Fig. 24 shows the flow of information in a method of administering a database according to a further embodiment of the invention.

According to this embodiment, a description 21 of the first data structure is compiled in an operation S010, from a first data structure 11, which is a part of a second database 10. This description of the first dataset is then processed so as to describe a second data structure, in the operation S020, to form a new description 22, the first database 30 is then operated upon in an operation S040, so as to comprise the second data structure, described by the description of the second data structure 22.

The operation S010 of compiling a dataset 21 descriptive of the first data structure may be carried out by requesting information form the second database using a database query language such a SQL, as described above.

The operation S020 of processing the descriptive dataset so as to describe a second data structure may correspond to a user making changes which correspond to a change in the structure of the data structure described by the descriptive dataset, for example the addition, modification or deletion of a relation or an element thereof, such as a column. The change may also relate to metadata aspects of the data structure, for example the assignment of a particular column as a foreign or primary key.

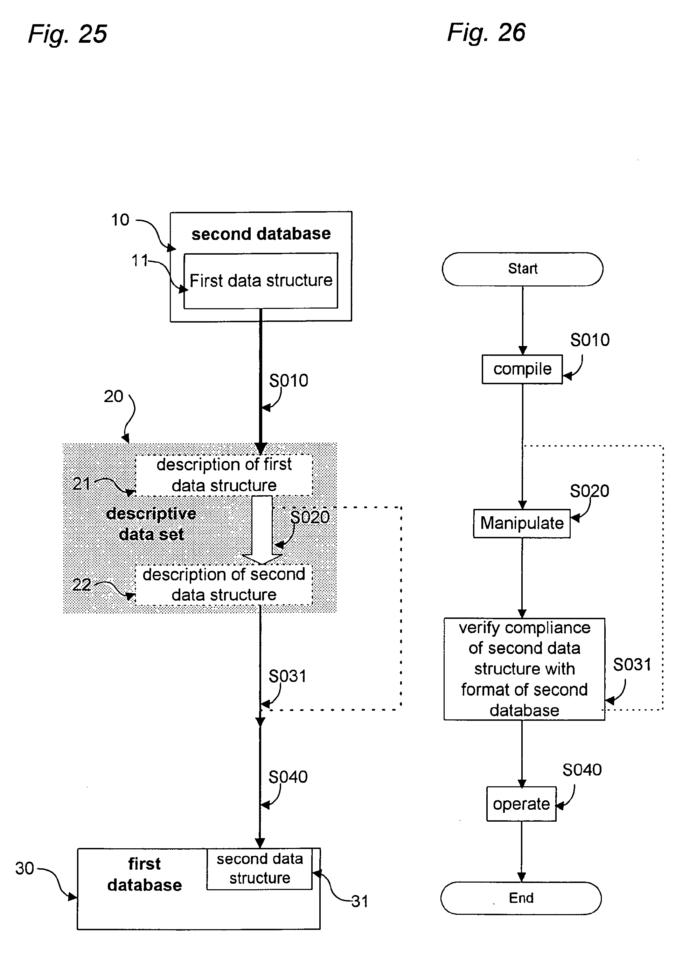

Fig. 25 shows the flow of information in a method of administering a database according to another embodiment of the invention.

This flow of information corresponds to the flow of information according to the embodiment of the invention as shown in Fig. 24, but further comprises the additional operation S031 of verifying whether the descriptive dataset describes a structure that complies with the format of the second database 10 after said operation S020 of processing, and prior to the operation of defining S040.

By way of example, it may be required that entries in a particular column in a particular table of the second database be of a particular data type, for example as an integer. It may be that changes are made to the dataset descriptive of a part of the second database including that particular table, such that the requirement that entries in the particular column in the a particular table of the second data structure described by the descriptive dataset after processing are no longer of the particular data type set in the second database. However, the operation S031 may be used to detect such deviations.

As a further development, it would be possible to either automatically amend the descriptive dataset at the defining operation S040 so as to describe a data structure complying with the format restrictions of the second database, or simply to alert a user to the situation, possibly with a suggested solution, either requiring that the user make necessary changes, or not, before proceeding to operation S040 of defining the first database so as to comprise the second data structure.

Fig. 26 shows the method of administering a database according to the embodiment of the invention shown in Fig. 25.

This method corresponds to the method operations shown in the flow of information according to the embodiment of the invention as shown in Fig. 24, but further comprises the additional operation S031 of verifying whether the descriptive dataset describes a structure that complies with the format of the second database 10 after said operation S020 of processing, and prior to the operation of defining S040, as described above with reference to Fig. 13.

The method thus comprises the step S010 of compiling a data set describing a first data structure, the step S020 of processing the descriptive data set to describe a second data structure, the step s031 of verifying compliance of the second data structure with the format of second database and the step S040 of defining the first database to comprise second data structure.

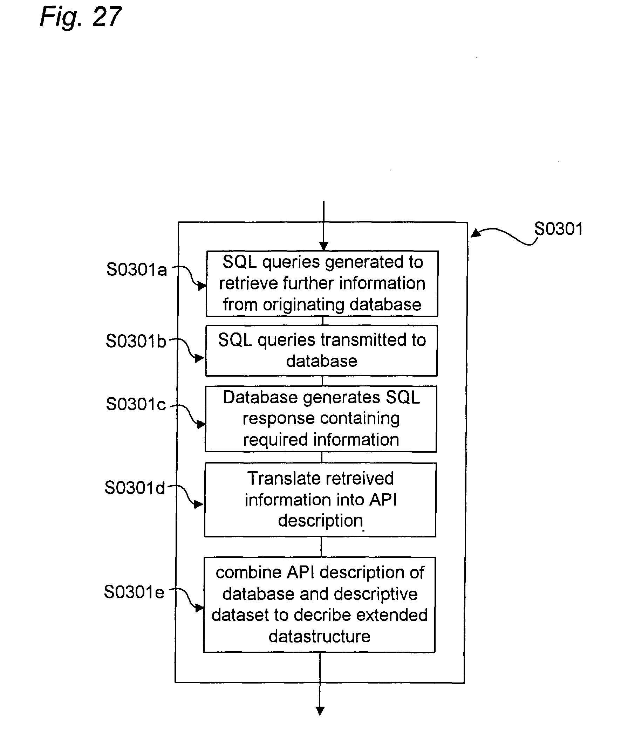

Fig. 27 shows further detail of the method of step S0301, as described above with reference to Fig. 20.

According to this embodiment, step S0301 comprises five sub-steps. At the first step, step S0301a, SQL queries are generated intended to retrieve the necessary information from the database for the valuation of the descriptive database in relation to the normal forms. This retrieved information may comprise the structural information relating to the database itself, so that a model of the complete database can be constructed as it would stand if the data structure described by the descriptive data set were to be incorporated into the database, which model can be tested as a whole for compliance with the normal forms.

Alternatively, the retrieved data may relate to only selected parts of the main database. It may also be desirable to test other characteristics of the descriptive data set, for example the use of the correct data types for corresponding fields etc. It may further be desirable to retrieve data values in order to verify the consistency of the data structure described by the descriptive data set with these values.

The SQL queries thus generated are then transmitted to the database at step S0301b. The database on receiving these queries generates an SQL response containing the requested information at step S0301c. The information transmitted from the database is received and translated into an API description at step S0301d, in a similar form to that of the descriptive data set, so that the two sets of information can be incorporated, compared, etc. as necessary.

Finally, at step e the API description of the database and the descriptive data set are merged to describe an extended data structure, the compliance of which with the normal forms is then verified in the following steps as described above with reference to Fig. 20.

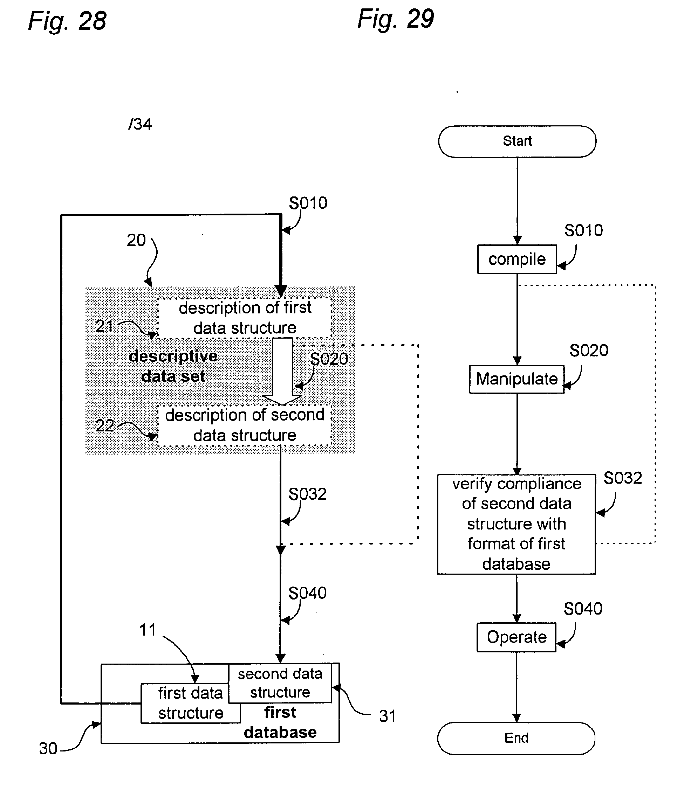

Fig. 28 shows the flow of information in a method of administering a database according to another embodiment of the invention.

This flow of information corresponds to the flow of information according to the embodiment of the invention as discussed with regard to Fig. 10, but further comprises the additional operation S032 of verifying whether the descriptive dataset describes a structure that complies with the format of the first database 30 after said operation S020 of processing, and prior to the operation of defining S040.

By way of example, it may be required that entries in a particular column in a particular table of the first database be of a particular data type, for example as an integer. It may be that changes are made to the dataset descriptive of a part of the first database including that particular table, such that the requirement that entries in the particular column in the a particular table of the second data structure described by the descriptive dataset after processing are no longer of the particular data-type set in the first database. However, the operation S032 could be used to detect such deviations. By this means, the possibility of the first database being corrupted by the modifications applied thereto is avoided.

As a further development, it would be possible to either automatically amend the descriptive dataset at the defining operation S040 so as to describe a data structure complying with the format restrictions of the first database, or simply to alert a user to the situation, possibly with a suggested solution, either requiring that the user make necessary changes, or not, before proceeding to operation S040 of defining the first database so as to comprise the second data structure.

Fig. 29 shows the method of administering a database according to the embodiment of the invention shown in Fig. 28.

This method corresponds to the method shown in the flow of information according to the embodiment of the invention as shown in Fig. 10, but further comprises the additional operation S032 of verifying whether the descriptive dataset describes a structure that complies with the format of the first database 30 after said operation S020 of processing, and prior to the operation of defining S040, as described above with reference to Fig. 26.

The method thus comprises the step S010 of compiling a data set describing a first data structure, the step S020 of processing the descriptive data set to describe a second data structure, the step s032 of verifying compliance of the second data structure with format of the first database and the step S040 of defining the first database to comprise the second data structure.

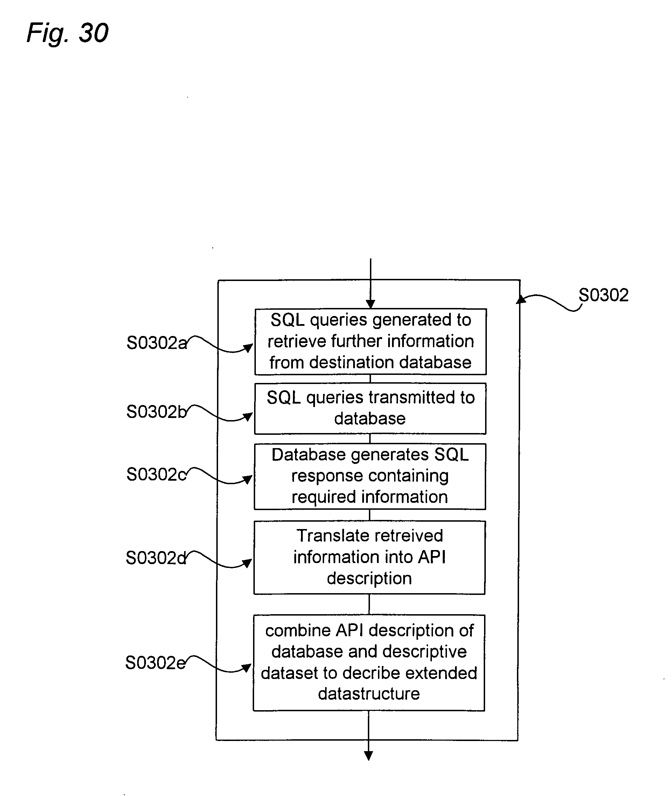

Fig. 30 shows further detail of the method of step S0302, as described above with reference to Fig. 20.

According to this embodiment, step S0302 comprises five sub-steps. At the first step, step S0302a, SQL queries are generated intended to retrieve the necessary information from the destination database, for the valuation of the descriptive database in relation to the normal forms.

This means that in the case where the data structure described by the descriptive dataset is to be generated in a database which is not the source of the original descriptive dataset, the verification steps are carried out on the basis of information retrieved from the destination database. This retrieved information may comprise the structural information relating to the database itself, so that a model of the complete database can be constructed as it would stand if the data structure described by the descriptive data set were to be incorporated into the database, which model can be tested as a whole for compliance with the normal forms. Alternatively, the retrieved data may relate to only selected parts of the main database. It may also be desirable to test other characteristics of the descriptive data set, for example the use of the correct data types for corresponding fields etc. It may further be desirable to retrieve data values in order to verify the consistency of the data structure described by the descriptive data set with these values.

The SQL queries thus generated are then transmitted to the database at step S0302b. The database on receiving these queries generates an SQL response containing the requested information at step S0302c. The information transmitted from the database is received and translated into an API description c, in a similar form to that of the descriptive data set, so that the two sets of information can be incorporated, compared, etc. as necessary.

Finally, at step s0302e the API description of the database and the descriptive data set are merged to describe an extended data structure, the compliance of which with the normal forms is then verified in the following steps as described above with reference to Fig. 20.

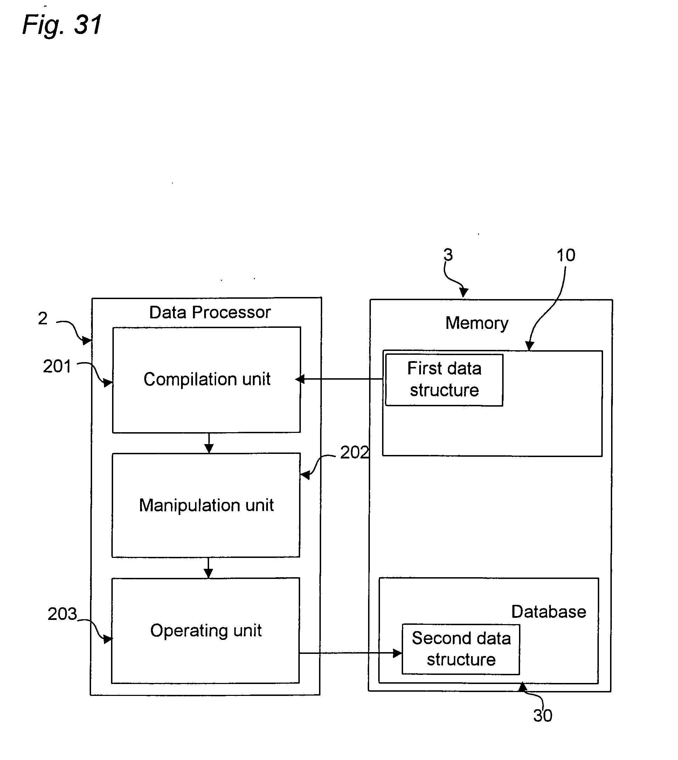

Fig. 31 shows a yet further embodiment of the present invention, which is a development of the embodiment discussed above with reference to Fig. 9.

According to this embodiment, there is provided a first data structure, in a further database 10, in addition to the second data structure 11 which is provided in the database 30. According to this embodiment, both databases 10 and 30 are provided in the same memory 3, although it would be equally possible to provide the two databases in separate memories, or indeed entirely separate computers which need not necessarily be at the same location. According to this embodiment, the compilation unit 201 retrieves data from the first data structure 11, to compile the descriptive data set, which is then manipulated in the manipulation unit 202, before being passed to the operating unit 203. The operating unit then acts on the second data structure 31 as described with reference to Fig. 9.

This embodiment may thus have the effect of generating an entirely new second data structure which may comprise an edited version of all or part of the first data structure, or alternatively may involve adding the edited version of all or part of the first data structure to an already existing data structure.

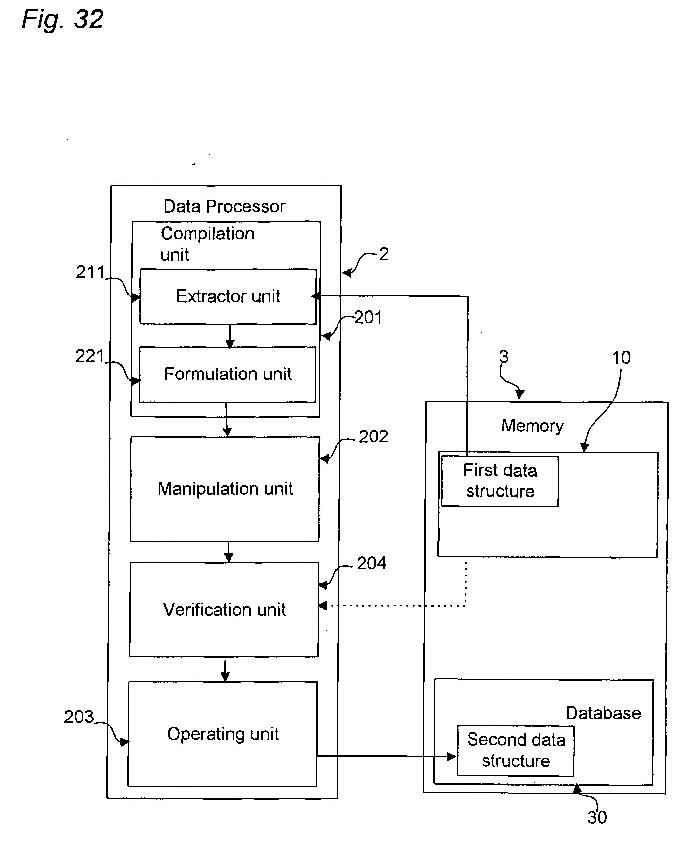

Fig. 32 shows a further development of this embodiment, which further includes the verification unit 204 as described above with reference to Fig. 23.

As shown in this Figure, at the verification unit 204, further information relating to the database 10 is retrieved, for example in the manner described with reference to Fig. 22, so as to verify the compliance of the extended data structure with the normal forms. Alternatively, this further information may be retrieved from the database 30, depending on the situation.

For example, in the situation where the second data structure is an entirely new data structure, based on an edited version of the first data structure, there will be no further information in the database 30 to retrieve, while it is important to ensure that the descriptive data set fully complies with the normal forms in the context of the first database. On the other hand, where the descriptive data set is to be incorporated into a pre-existing second data structure, it is necessary to ensure that the descriptive data set complies with the format of the data structure into which it is to be incorporated. The choice of the source of this information can be selected by a user, or preferably automatically on the basis of the exact nature of the task to be accomplished.

Any of the embodiments of the present invention can be realised in a distributed manner, in which certain functional units are positioned, or certain steps are performed, at distinct locations. These locations may be geographically distant, whereby communication between the processes or functional units thus separated may take place over a network connection or other communications link, or may alternatively take place in separate elements of a single processor or other data management device.

A common approach to distributed arrangements, and in particular to database access and editing, is the client server relationship. In this arrangement, a database may be notionally located a central server, which can be accessed and or modified by one or more notionally remote "clients", where clients are software or hardware elements resident in remote devices and adapted for communicating with the server, and where necessary interpreting the commands of a user to the database, and the information from the database to the user.

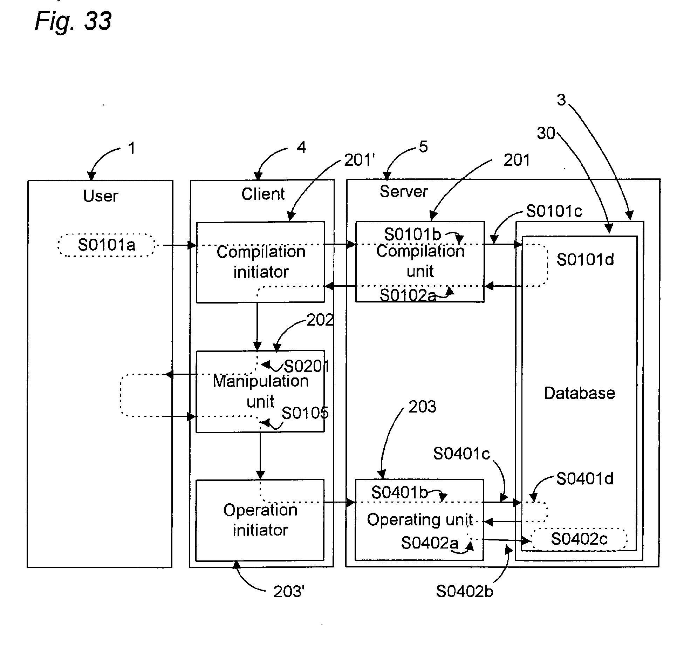

Figures 33, 34, 35 and 36 show possible distributions of functional units as described with regard to the foregoing embodiments between a client and a server, and the distribution of method steps as described with regard to the foregoing embodiments between a user, a client and a server.

Fig. 33 shows a possible distribution of the functional units as described with regard to the forgoing embodiment between a client and a server and the distribution of method steps as described with regard to the foregoing embodiment between a user, a client and a server.

According to this embodiment, there is provided a compilation initiator 201', a manipulation unit 202, and a operation initiator 203' at a client 4, and a compilation unit 201, an operating unit 203 and a memory 3 storing a database 30 at a server 5. The compilation unit 201, manipulation unit 202, operating unit 203, and database 30 all fulfil the functions described in relation thereto in the foregoing embodiment. The compilation initiator 201' performs the operation of instructing the compilation unit 201 to perform compilation tasks required, and the operation initiator 203' performs the function of instructing the operating unit 203 to perform operating tasks as required. The system as described with regards to Fig. 3 further allows for input from a user 1.

In operation, according to one embodiment of the invention, the user provides information at a step S0101a identifying the part of the database 30 that is to be edited. The compilation unit S0101b at the server 5 generators SQL queries to retrieve the indicated information from the database 30, when suitably instructed by the compilation initiator 201' at the client 4. The SQL queries generated by the compilation unit 201 are transmitted to the database 30 at step S0101c, and at step S0101d the database generates an SQL response containing the requested information, which in returned to the compilation unit 201. At step S0102a, the information received from the database is translated into an API description of the part of the database identified by the user at step S0101a.

The descriptive dataset thus compiled is then returned to the client 4, and then to the manipulation unit 202 thereof. The manipulation unit 202 generates a visual representation of the descriptive dataset in a graphical user interface environment at step S0201, which is displayed to the user 1. There ensues a series of manipulation procedures at which the user is able to modify the visual representation, such that corresponding changes are made to the descriptive dataset, as described with regard to Figures 5 to 8.

Finally, when it is detected that the user has made an input corresponding to a request to finalise the changes made at step S0105, the descriptive dataset as modified by the manipulation unit 202 is forwarded via the operation initiation 203' to the operating unit 203 at the server 5.

The operating unit 203 then proceeds to generate SQL queries to retrieve information about the present state of the database 30 at step S0401b, when suitably operated by the operation initiator 203'. The SQL queries are transmitted to the database at step S0401c, which then generates the SQL response containing required information at step S0401d. This information is returned to the operating unit 203, which at step S0402a generates SQL instructions able to case modifications to the database so as to bring the indicated part of that database into conformity with the descriptive dataset at step S0402a. These SQL instructions are transmitted to the database at step S0402b, and finally at step S0402c the database is amended.

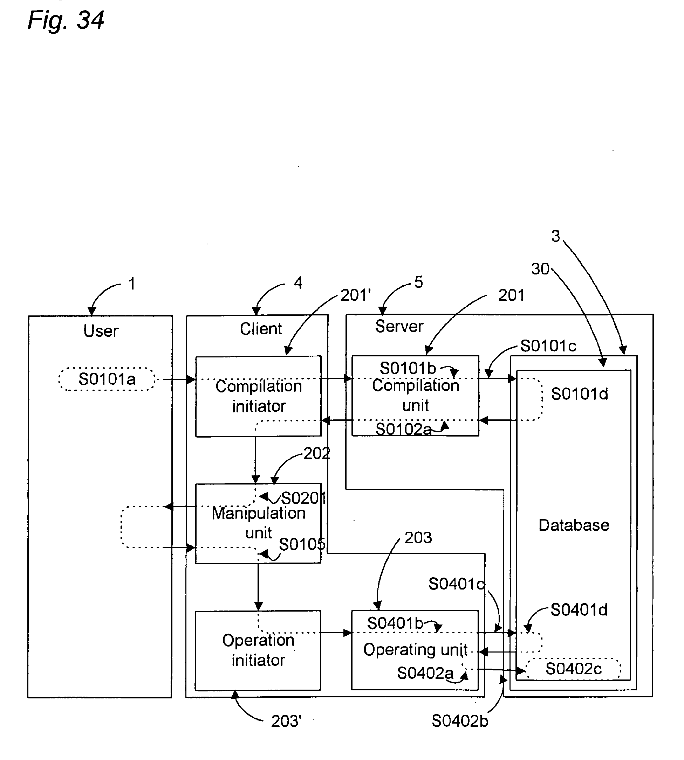

Fig. 34 shows a further possible distribution of the functional units as described with regard to the forgoing embodiment between a client and a server and the distribution of method steps as described with regard to the foregoing embodiment between a user, a client and a server.

According to this embodiment, there is provided a compilation initiator 201', a manipulation unit 202, and a operation initiator 203' and an operating unit 203 at a client 4, and a compilation unit 201 and a memory 3 storing a database 30 at a server 5. The compilation unit 201, manipulation unit 202, operating unit 203, and database 30 all fulfil the functions described in relation thereto in the foregoing embodiment. The compilation initiator 201' performs the operation of instructing the compilation unit 201 to perform compilation tasks required, and the operation initiator 203' performs the function of instructing the operating unit 203 to perform operating tasks as required. The system as described with regards to Fig. 3 further allows for input from a user 1.

In operation, according to one embodiment of the invention, the user provides information at a step S0101a identifying the part of the database 30 that is to be edited. The compilation unit S0101b generators SQL queries to retrieve the indicated information from the database 30 when suitably instructed by the compilation initiator 201'. The SQL queries generated by the compilation unit 201 are transmitted to the database 30 at step S0101c, and at step S0101d the database generates an SQL response containing the requested information, which in returned to the compilation unit 201. At step S0102a, the information received from the database is translated into an API description of the part of the database identified by the user at step S0101a.

The descriptive dataset thus compiled is then returned to the client 4, and then to the manipulation unit 202 thereof. The manipulation unit 202 generates a visual representation of the descriptive dataset in a graphical user interface environment at step S0201, which is displayed to the user 1.

There ensues a series of manipulation procedures at which the user is able to modify the visual representation, such that corresponding changes are made to the descriptive dataset, as described with regard to Figures 5 to 8.

Finally, when it is detected that the user has made an input corresponding to a request to finalise the changes made at step S0105, the descriptive dataset as modified by the manipulation unit 202 is forwarded via the operation initiation 203' to the operating unit 203 which is also located at the client 4.

The operating unit 203 then proceeds to generate SQL queries to retrieve information about the present state of the database 30 at step S0401b, when suitably operated by the operation initiator 203'. The SQL queries are transmitted to the database, which is at the server 5, at step S0401c, which then generates the SQL response containing required information at step S0401d.

This information is returned to the operating unit 203 at the client 4, which at step S0402a generates SQL instructions able to case modifications to the database so as to bring the indicated part of that database into conformity with the descriptive dataset at step S0402a. These SQL instructions are transmitted to the database at step S0402b, and finally at step S0402c the database is amended.

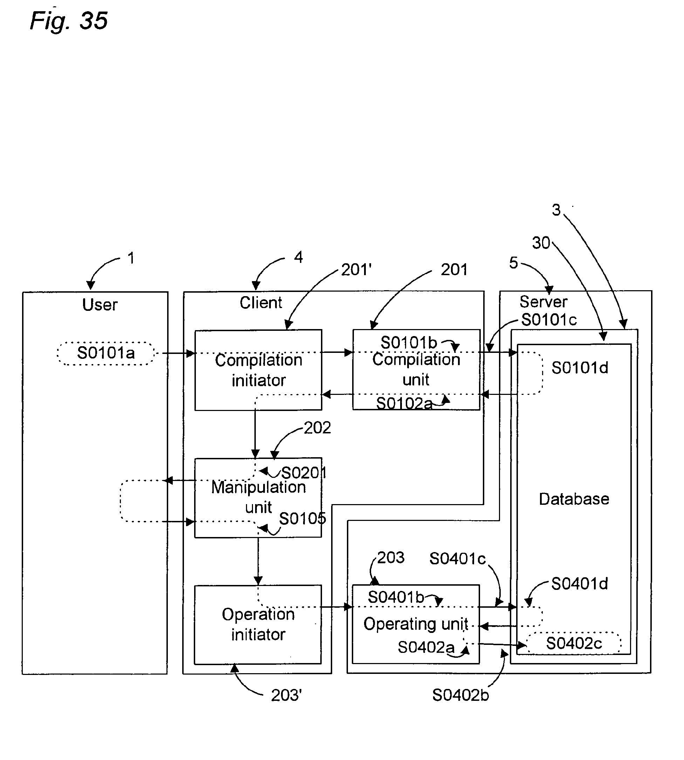

Fig. 35 shows a possible distribution of the functional units as described with regard to the forgoing embodiment between a client and a server and the distribution of method steps as described with regard to the foregoing embodiment between a user, a client and a server.

According to this embodiment, there is provided a compilation initiator 201', a manipulation unit 202, and a operation initiator 203' and a compilation unit 201 at a client 4, and an operating unit 203 and a memory 3 storing a database 30 at a server 5. The compilation unit 201, manipulation unit 202, operating unit 203, and database 30 all fulfil the functions described in relation thereto in the foregoing embodiment. The compilation initiator 201' performs the operation of instructing the compilation unit 201 to perform compilation tasks required, and the operation initiator 203' performs the function of instructing the operating unit 203 to perform operating tasks as required. The system as described with regards to Fig. 3 further allows for input from a user 1.

In operation, according to one embodiment of the invention, the user provides information at a step S0101a identifying the part of the database 30 that is to be edited. The compilation unit S0101b generators SQL queries to retrieve the indicated information from the database 30 when suitably instructed by the compilation initiator 201'. The SQL queries generated by the compilation unit 201 at the client 4 are transmitted to the database 30, at the server 5, at step S0101c, and at step S0101d the database generates an SQL response containing the requested information, which is returned to the compilation unit 201 at the client 4. At step S0102a, the information received from the database is translated into an API description of the part of the database identified by the user at step S0101a.

The descriptive dataset thus compiled is then returned to the manipulation unit 202. The manipulation unit 202 generates a visual representation of the descriptive dataset in a graphical user interface environment at step S0201, which is displayed to the user 1. There ensues a series of manipulation procedures at which the user is able to modify the visual representation, such that corresponding changes are made to the descriptive dataset, as described with regard to Figures 5 to 8.

Finally, when it is detected that the user has made an input corresponding to a request to finalise the changes made at step S0105, the descriptive dataset as modified by the manipulation unit 202 is forwarded via the operation initiation 203' at the client 4 to the operating unit 203 at the server 5.

The operating unit 203 then proceeds to generate SQL queries to retrieve information about the present state of the database 30 at step S0401b, when suitably operated by the operation initiator 203'. The SQL queries are transmitted to the database at step S0401c, which then generates the SQL response containing required information at step S0401d. This information is returned to the operating unit 203, which at step S0402a generates SQL instructions able to case modifications to the database so as to bring the indicated part of that database into conformity with the descriptive dataset at step S0402a. These SQL instructions are transmitted to the database at step S0402b, and finally at step S0402c the database is amended.

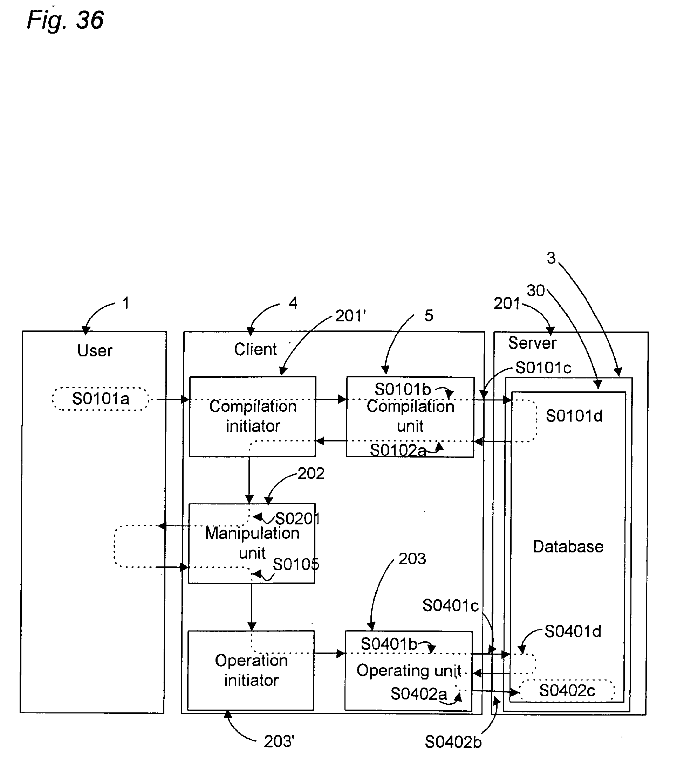

Fig. 36 shows a possible distribution of the functional units as described with regard to the forgoing embodiment between a client and a server and the distribution of method steps as described with regard to the foregoing embodiment between a user, a client and a server.

According to this embodiment, there is provided a compilation initiator 201', a manipulation unit 202, an operation initiator 203' a compilation unit 201, and an operating unit 203 at a client 4, and a memory 3 storing a database 30 at a server 5. The compilation unit 201, manipulation unit 202, operating unit 203, and database 30 all fulfil the functions described in relation thereto in the foregoing embodiment. The compilation initiator 201' performs the operation of instructing the compilation unit 201 to perform compilation tasks required, and the operation initiator 203' performs the function of instructing the operating unit 203 to perform operating tasks as required. The system as described with regards to Fig. 3 further allows for input from a user 1.

In operation, according to one embodiment of the invention, the user provides information at a step S0101a identifying the part of the database 30 that is to be edited. The compilation unit S0101b generators SQL queries to retrieve the indicated information from the database 30 when suitably instructed by the compilation initiator 201'.

The SQL queries generated by the compilation unit 201, located at the client, are transmitted to the database 30, at the server, at step S0101c, and at step S0101d the database generates an SQL response containing the requested information, which in returned to the compilation unit 201 at the client. At step S0102a, the information received from the database is translated into an API description of the part of the database identified by the user at step S0101a.

The descriptive dataset thus compiled is then sent to the manipulation unit 202. The manipulation unit 202 generates a visual representation of the descriptive dataset in a graphical user interface environment at step S0201, which is displayed to the user 1. There ensues a series of manipulation procedures at which the user is able to modify the visual representation, such that corresponding changes are made to the descriptive dataset, as described with regard to Figures 5 to 8.

Finally, when it is detected that the user has made an input corresponding to a request to finalise the changes made at step S0105, the descriptive dataset as modified by the manipulation unit 202 is forwarded via the operation initiation 203' to the operating unit 203. The operating unit 203 then proceeds to generate SQL queries to retrieve information about the present state of the database 30 at step S0401b, when suitably operated by the operation initiator 203'.

The SQL queries are transmitted from the client to the database, located at the server, at step S0401c, which then generates the SQL response containing required information at step S0401d. This information is returned to the operating unit 203 at the client, which at step S0402a generates SQL instructions able to case modifications to the database so as to bring the indicated part of that database into conformity with the descriptive dataset at step S0402a. These SQL instructions are transmitted from the client to the database, at the server, at step S0402b, and finally at step S0402c the database is amended.

As stated above, the first database and the first data structure may be accessible simultaneously by a plurality of processes simultaneously, some or all of which processes may or may not be embodiments of the present invention.

In the case of at least the embodiments of the invention described in Figures 6, 7 and 16, in which the first data originates in the first database, the situation may arise where for example two users manipulate the same first data structure simultaneously but differently. One user causes the first database to be amended to at least partially replace the first data structure with his second data structure such that when the second user attempts to replace the first data structure with his second data structure, it is found that the first data structure no longer exists. Situations of this kind can result in corruption of the database, and it will thus be desirable to incorporate a mechanism to prevent this occurring.

Such a mechanism may involve permitting only one user access to a particular first data structure at a time, only allowing others to view, but not manipulate a particular first data structure that is presently being manipulated by another user, or other techniques as may readily occur to the skilled person.

Alternatively, it may be possible to programmatically combine the second data structures of a plurality of users to arrive a combined second data structure.

It is noted that a program or programs may be provided having instructions adapted to cause a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. The computer-readable medium may constitute a data stream embodying the program. Further, the computer-readable medium may constitute a data structure embodying the program. Further, a computer program product may be provided comprising the computer-readable medium.

According to a further embodiment of the invention there is provided a client side component of a data structure manipulation system as described with reference to any of Figures 2 to 17, comprising a compiler for compiling a dataset 21 descriptive of a first data structure, and a processor for amending S020, S021, S022 said dataset so as to describe a second data structure 31.

According to a further embodiment of the invention there is provided a client side component of a data structure manipulation system as described with reference to any of Figures 2 to 17, comprising a compiler for compiling a dataset 21 descriptive of a first data structure, said processor for amending S020, S021, S022 said dataset so as to describe a second data structure 31, and an operating unit, for operating on S040 at least a part of a database 30 so that it comprises said second data structure.

According to a further embodiment of the invention there is provided a client side component of a data structure manipulation system as described with reference to any of Figures 2 to 17, comprising a processor for amending S020, S021, S022 a dataset 21 descriptive of a first data structure compiled at a server so as to describe a second data structure 31, and an operating unit for operating on S040 at least a part of a database 30 so that it comprises said second data structure.

According to a further embodiment of the invention there is provided a client side component of a data structure manipulation system as described with reference to any of Figures 2 to 17, comprising, a processor for amending S020, S021, S022 a dataset 21 descriptive of a first data structure compiled at a server so as to describe a second data structure 31.

According to a further embodiment of the invention there is provided a server side component of a data structure manipulation system as described with reference to any of Figures 2 to 17, comprising, said operating unit, for operating on S040 at least a part of a database 30 so that it comprises said second data structure.

According to a further embodiment of the invention there is provided a server side component of a data structure manipulation system as described with reference to any of Figures 2 to 17, comprising, said compiler for compiling a dataset 21 descriptive of a first data structure.

According to another embodiment of the invention, a data structure manipulation system may have the following configuration:
1) A data structure manipulation system, comprising:
   a code section having instructions adapted to compile a dataset 21 descriptive of a first data structure;
   a code section having instructions adapted to amend S020, S021, S022 said dataset so as to describe a second data structure 31;
   a code section having instructions adapted to operate on S040 at least a part of a database 30 so that it comprises said second data structure; and
   a code section having instructions adapted to store said database 30 in a memory.
2) The data structure manipulation system of 1) including a code section having instructions adapted to compile said dataset 21 descriptive of a first data structure from at least a part of said database 10.
3) The data structure manipulation system of 2) including a code section having instructions adapted to operate on S040 at least a part of a database 30 so that it comprises said second data structure such that said second data structure 31 at least partially replaces said first data structure 11 in said database 30.
4) The data structure manipulation system of 1) including a code section having instructions adapted to compile said dataset 21 descriptive of said first data structure from data contributed by a user 12.
5) The data structure manipulation system of 4) including a code section having instructions adapted to compile said dataset 21 descriptive of said first data structure so as to comprise data descriptive of the structure of said first data structure.
6) The data structure manipulation system of 4) including a code section having instructions adapted to compile said dataset 21 descriptive of said first data structure so as to comprise data descriptive of the values stored in said first data structure.
7) The data structure manipulation system of 4) including a code section having instructions adapted to compile said dataset 21 descriptive of said first data structure so as to comprise a description of the relations between elements of the first data structure.
8) The data structure manipulation system of any of 1) further comprising:
   a code section having instructions adapted to extract information from said first data structure; and
   a code section having instructions adapted to formulate said dataset so as to describe said first data structure based on said extracted information.
9) The data structure manipulation system of 8) including a code section having instructions adapted to formulate said first data structure according to a predefined format.
10) The data structure manipulation system of 1) including a code section having instructions adapted to amend said dataset 21 in a manner which corresponds to a change in the value of data in said first data structure 11.
11) The data structure manipulation system of 1) including a code section having instructions adapted to manipulate said dataset 21 descriptive of said first data structure so as to include adding a data value.
12) The data structure manipulation system of 1) including a code section having instructions adapted to amend said dataset 21 in a manner which corresponds to a change in a structural feature of said first data structure 11.
13) The data structure manipulation system of 1) including a code section having instructions adapted to add a structural feature.
14) The data structure manipulation system of 1) including a code section having instructions adapted to generate history data of a sequence of individual manipulation operations.
15) The data structure manipulation system of 14) including a code section having instructions adapted to access the history data to undo or redo at least one of the manipulation operations.
16) The data structure manipulation system of 1) further including a code section having instructions adapted to perform an operation of verifying whether said dataset describes a structure that complies with a predetermined format, before passing said dataset to said operating unit.
17) The data structure manipulation system of 16) including a code section having instructions adapted to determine whether the descriptive dataset complies with a set of predefined rules.
18) The data structure manipulation system of 1) including a code section having instructions adapted to perform an operation of verifying whether said dataset describes a structure that complies with the structure of said database, before passing said dataset to said operating unit.
19) The data structure manipulation system of 1) further including
   a code section having instructions adapted to interpret said dataset in the context of the format of said database; and
   a code section having instructions adapted to send instructions to said database so that said database reflects the dataset as interpreted by said interpretation unit.
20) The data structure manipulation system of 19) including a code section having instructions adapted to analyse the structural features of the dataset and data.
21) The data structure manipulation system of 19) including a code section having instructions adapted to modify the structural features of the database corresponding to the structural feature of the dataset and modifying the data of the database corresponding to the data included in the dataset.
22) The data structure manipulation system of 1) including a code section having instructions adapted to compile said dataset 21 descriptive of a first data structure from at least a part of a second database 10.
23) The data structure manipulation system of 1) further including a code section having instructions adapted to perform an operation of verifying whether said dataset describes a structure that complies with the structure of said further database, before passing said dataset to said operating unit.
24) The data structure manipulation system of 1) wherein said first data structure comprises a plurality of two-dimensional tables.
   According to another embodiment of the invention, a client side component may have the following configuration.
25) A client side component of a data structure manipulation system, said client side component including:
   a code section having instructions adapted to cause a dataset 21 descriptive of a first data structure to be compiled;
   a code section having instructions adapted to cause amendment S020, S021, S022 of said dataset so as to describe a second data structure 31; and
   a code section having instructions adapted to cause at least a part of a database 30 to be operated upon so that it comprises said second data structure.
26) The client side component of a data structure manipulation system of 25) wherein said descriptive dataset is compiled at a server.
27) The client side component of a data structure manipulation system of 25) further including a code section having instructions adapted to compile a dataset 21 descriptive of said first data structure.
28) The client side component of a data structure manipulation system of 25) further including a code section having instructions adapted to operate on S040 at least a part of said database 30 so that said database comprises said second data structure.
   According to another embodiment of the invention, a server side component may have the following configuration.
29) A server side component of a data structure manipulation system, for use in conjunction with the client side component of 25), said server side component comprising:
   a code section having instructions adapted to store said database in a memory; and
   a code section having instructions adapted to operate, in response to a signal from said operation initiator, on at least a part of said database 30 so that said database comprises a second data structure described by said descriptive dataset.
30) The server side component of a data structure manipulation system of 29) further including a code section having instructions adapted to compile, in response to a signal from said compilation initiator, said dataset 21 descriptive of said first data structure.

## Claims

1. A method of manipulating a first data structure (11), comprising the operations of:
- performing a compilation operation (S010) to generate a dataset (21) descriptive of said first data structure;
- manipulating (S020, S021, S022) said dataset so as to describe a second data structure (31); and
- operating on (S040) at least a part of a database (30) so that it comprises said second data structure.

2. The method of claim 1 wherein said first data structure (11) is at least a part of said database (30).

3. The method of claim 2 wherein at said operation of operating on said second data structure (31) said first data structure (11) is at least partially replaced in said database (30).

4. The method of claim 1 wherein said dataset (21) is compiled from data contributed by a user (12).

5. The method of any preceding claim wherein said compilation operation (S010) comprises the further operations of:
extracting information from said first data structure; and
formulating said dataset so as to describe said first data structure based on said extracted information.

6. The method of claim 5 wherein said information comprises data descriptive of the structure of said first data structure.

7. The method of claim 5 wherein said information comprises data descriptive of the values stored in said first data structure.

8. The method of claim 5 wherein said information comprises a description of the relations between elements of the first data structure.

9. The method of claim 5 wherein said dataset is formulated to describe said first data structure according to a predefined format.

10. The method of any preceding claim wherein said operation of manipulating (S021) comprises changing said dataset (21) in a manner which corresponds to a change in the value of data in said first data structure (11).

11. The method of claim 10 wherein said operation of manipulating includes adding a data value.

12. The method of any preceding claim wherein said operation of manipulating (S022) comprises changing said dataset (21) in a manner which corresponds to a change in a structural feature of said first data structure (11).

13. The method of claim 12 wherein said operation of manipulating includes adding a structural feature.

14. The method of any preceding claim wherein said operation of manipulating (S022) comprises generating history data of a sequence of individual manipulation operations.

15. The method of any preceding claim wherein said operation of manipulating (S022) comprises accessing history data to undo or redo at least one of the manipulation operations.

16. The method of any preceding claim, wherein prior to said operating step, there is further performed an operation of verifying (S030) whether said dataset describes a structure that complies with a predetermined format.

17. The method of claim 16 wherein said operation of verification comprises determining whether the descriptive dataset complies with a set of predefined rules.

18. The method of claim 3, wherein prior to said operating step, there is further performed an operation of verifying (S032) whether said dataset describes a structure that complies with the structure of said database.

19. The method of any preceding claim wherein said operating step comprises the operations of:
interpreting said dataset in the context of the format of said database; and
instructing said database so that said database reflects the interpreted dataset.

20. The method of claim 19 wherein said operation of interpreting includes analysing the structural features of the dataset and data.

21. The method of claim 19 wherein said operation of interpreting includes modifying the structural features of the database corresponding to the structural features of the dataset and modifying the data of the database corresponding to the data included in the dataset.

22. The method of any preceding claim wherein said first data structure (11) is at least a part of a further database (10).

23. The method of claim 19, wherein prior to said operation of operating, there is further performed an operation of verifying (S031) whether said dataset describes a structure that complies with the structure of said further database.

24. The method of claim 1 wherein said first data structure comprises a plurality of two dimensional tables.

25. A data structure manipulation system, comprising:
a compilation unit (201) for compiling a dataset (21) descriptive of a first data structure;
a manipulation unit (202) for amending (S020, S021, S022) said dataset so as to describe a second data structure (31);
an operating unit (203), for operating on (S040) at least a part of a database (30) so that it comprises said second data structure; and
a memory for storing said database (30).

26. The data structure manipulation system of claim 25 wherein said compilation unit is adapted to compile said dataset (21) descriptive of a first data structure from at least a part of said database (10).

27. The data structure manipulation system of claim 26 wherein said operating unit is adapted to operate on (S040) at least a part of a database (30) so that it comprises said second data structure such that said second data structure (31) at least partially replaces said first data structure (11) in said database (30).

28. The data structure manipulation system of any of claims 25 to 27 wherein said compilation unit (201) is adapted to compile said dataset (21) descriptive of said first data structure from data contributed by a user (12).

29. The data structure manipulation system of claim 28 wherein said compilation unit (201) is adapted to compile said dataset (21) descriptive of said first data structure so as to comprise data descriptive of the structure of said first data structure.

30. The data structure manipulation system of claim 28 wherein said compilation unit (201) is adapted to compile said dataset (21) descriptive of said first data structure so as to comprise data descriptive of the values stored in said first data structure.

31. The data structure manipulation system of claim 28 wherein said compilation unit (201) is adapted to compile said dataset (21) descriptive of said first data structure so as to comprise a description of the relations between elements of the first data structure.

32. The data structure manipulation system of any of claims 25 to 31 wherein said compilation unit (201) further comprises:
an extractor unit (211) for extracting information from said first data structure; and
a formulation unit (221) for formulating said dataset so as to describe said first data structure based on said extracted information.

33. The data structure manipulation system of claim 32 wherein said formulation unit (221) is adapted to formulate said first data structure according to a predefined format.

34. The data structure manipulation system of any of claims 25 to 33 wherein said manipulation unit is adapted to amend said dataset (21) in a manner which corresponds to a change in the value of data in said first data structure (11).

35. The data structure manipulation system of any of claims 25 to 33 wherein said manipulation unit is adapted to Manipulate said dataset (21) descriptive of said first data structure so as to include adding a data value.

36. The data structure manipulation system of any of claims 25 to 33 wherein said manipulation unit is adapted to amend said dataset (21) in a manner which corresponds to a change in a structural feature of said first data structure (11).

37. The data structure manipulation system of any of claims 25 to 33 wherein said manipulation unit is adapted to add a structural feature.

38. The data structure manipulation system of any of claims 25 to 37 wherein said manipulation unit is adapted to generate history data of a sequence of individual manipulation operations.

39. The data structure manipulation system of claim 38 wherein said manipulation unit is further adapted to access the history data to undo or redo at least one of the manipulation operations.

40. The data structure manipulation system of any of claims 25 to 39, further comprising a verification unit adapted to perform an operation of verifying whether said dataset describes a structure that complies with a predetermined format, before passing said dataset to said operating unit.

41. The data structure manipulation system of claim 40 wherein said verification unit is adapted to determine whether the descriptive dataset complies with a set of predefined rules.

42. The data structure manipulation system of any of claims 25 to 41, further comprising a verification unit adapted to perform an operation of verifying whether said dataset describes a structure that complies with the structure of said database, before passing said dataset to said operating unit.

43. The data structure manipulation system of any of claims 25 to 42, wherein said operating unit further comprises:
an interpretation unit for interpreting said dataset in the context of the format of said database; and
an instruction unit for sending instructions to said database so that said database reflects the dataset as interpreted by said interpretation unit.

44. The data structure manipulation system of claim 43 wherein said interpretation unit is adapted to analyse the structural features of the dataset and data.

45. The data structure manipulation system of claim 43 wherein said interpretation unit is adapted to modify the structural features of the database corresponding to the structural feature of the dataset and modifying the data of the database corresponding to the data included in the dataset.

46. The data structure manipulation system of any of claims 25 to 43 wherein said compilation unit is adapted to compile said dataset (21) descriptive of a first data structure from at least a part of a second database (10).

47. The data structure manipulation system of claim 25, further comprising a verification unit adapted to perform an operation of verifying whether said dataset describes a structure that complies with the structure of said further database, before passing said dataset to said operating unit.

48. The data structure manipulation system of any of claims 25 to 47 wherein said first data structure comprises a plurality of two-dimensional tables.

49. A client side component of a data structure manipulation system, said client side component comprising:
a compilation initiator for causing a dataset (21) descriptive of a first data structure to be compiled;
a manipulation initiator for causing amendment (S020, S021, S022) of said dataset so as to describe a second data structure (31); and
an operation initiator for causing at least a part of a database (30) to be operated upon so that it comprises said second data structure.

50. The client side component of a data structure manipulation system of claim 47 wherein said descriptive dataset is compiled at a server.

51. The client side component of a data structure manipulation system of claim 49 or 50 further comprising a compilation unit for compiling a dataset (21) descriptive of said first data structure.

52. The client side component of a data structure manipulation system of any of claims 49 to 51 further comprising an operating unit, for operating on (S040) at least a part of said database (30) so that said database comprises said second data structure.

53. A server side component of a data structure manipulation system, for use in conjunction with the client side component of claim 49, said server side component comprising:
a memory for storing said database; and
an operating unit for operating, in response to a signal from said operation initiator, on at least a part of said database (30) so that said database comprises a second data structure described by said descriptive dataset.

54. The server side component of a data structure manipulation system of claim 53, further comprising:
a compilation unit for compiling, in response to a signal from said compilation initiator, said dataset (21) descriptive of said first data structure.

55. A program having instructions adapted to carry out the method of any of claims 1 to 24.

56. A computer readable medium in which a program in embodied, said program having instructions adapted to carry out the method of any of claims 1 to 24.

57. A computer program product comprising the computer readable medium of claim 56.

58. A computer system comprising a data structure manipulation system according to any one of claims 25 to 48.
